# EUROPEAN PATENT SPECIFICATION

(11) **EP 4 465 665 B1**
(45) Date of publication and mention of the grant of the patent: **01.07.2026**
(21) Application number: 22920847.5
(22) Date of filing: 30.12.2022
(51) Int. Cl.: H04W 36/00, H04W 76/23, G08G 1/00, H04B 17/318, H04B 17/373, H04W 4/44, H04W 4/46, H04W 76/14, H04W 84/20

(54) **ELECTRONIC APPARATUS MOUNTED ON MASTER VEHICLE FROM AMONG PLURALITY OF VEHICLES THAT ARE IN PLATOONING AND OPERATION METHOD THEREFOR**
ELEKTRONISCHE VORRICHTUNG, DIE AUF EINEM MASTER-FAHRZEUG VON MEHREREN IN EINER KOLONNE SICH BEFINDENDEN FAHRZEUGEN MONTIERT IST, UND BETRIEBSVERFAHREN DAFÜR
APPAREIL ÉLECTRONIQUE MONTÉ SUR UN VÉHICULE MAÎTRE PARMI UNE PLURALITÉ DE VÉHICULES QUI SONT EN PELOTON ET SON PROCÉDÉ DE FONCTIONNEMENT

(30) Priority: 14.01.2022 KR 20220006049; 16.02.2022 KR 20220020396
(43) Date of publication of application: 20.11.2024
(73) Proprietor: Samsung Electronics Co., Ltd., Gyeonggi-do, 16677 (KR)
(72) Inventor: NAM, Yoongoo, Suwon-si, Gyeonggi-do 16677 (KR); HAN, Kiseung, Suwon-si, Gyeonggi-do 16677 (KR); LEE, Woong, Suwon-si, Gyeonggi-do 16677 (KR); LEE, Yuseon, Suwon-si, Gyeonggi-do 16677 (KR); LEE, Jaewoong, Suwon-si, Gyeonggi-do 16677 (KR); JANG, Changwon, Suwon-si, Gyeonggi-do 16677 (KR); JU, Seungbum, Suwon-si, Gyeonggi-do 16677 (KR)
(74) Representative: Gulde & Partner
(86) International application number: PCT/KR2022/021725
(87) International publication number: WO 2023/136520

(56) References cited:
- KR-B1- 102 221 559
- KR-B1- 102 286 007
- US-A1- 2014 316 671
- US-A1- 2018 253 976
- US-A1- 2020 090 521
- US-A1- 2020 402 407
- MYOUNGGYU WON: "L-Platooning: A Protocol for Managing a Long Platoon with DSRC", ARXIV.ORG, CORNELL UNIVERSITY LIBRARY, 201 OLIN LIBRARY CORNELL UNIVERSITY ITHACA, NY 14853, 23 March 2021 (2021-03-23), XP081897115, DOI: 10.1109/TITS.2021.3057956
- KSOURI CHAHRAZED: "Smart Mobility and Routing in Intermittent Infrastructure-based Internet of Vehicles", DOCOTORAL THESIS, UNIVERSITY OF BORDEAUX, 1 July 2021 (2021-07-01), XP093080755, Retrieved from the Internet <URL:https://theses.hal.science/tel-03275319/document> [retrieved on 20230911]

## Description

### Technical Field

The present disclosure relates to an electronic device mounted on a master vehicle from among a plurality of vehicles travelling in a platoon and an operation method of the electronic device. In detail, the present disclosure provides an electronic device that is mounted on a master vehicle among a plurality of vehicles traveling in a platoon and performs data communication with a base station and a plurality of slave devices respectively mounted on the plurality of vehicles and an operation method of the electronic device.

### Background Art

Recently, autonomous driving technology has been used to allow vehicles to recognize their own lane and adjust their distance to a vehicle in front of them without driver intervention. However, on actual driving roads, even when one vehicle supports autonomous driving technology, the vehicle has a limitation for operating as a complete autonomous driving system, and therefore, platooning technology that allows autonomous vehicles to move in a group has been developed.

'Platooning' refers to a plurality of vehicles forming a platoon and driving together while exchanging information with each other via vehicle-to-everything (V2X) communication. Depending on how platooning is implemented, a leader vehicle (or a master vehicle) is driven by a professional driver, and a follower vehicle (or a slave vehicle) may follow the master vehicle in a fully autonomous driving state by using the distance to the vehicle in front, lane information, and traveling path information of the vehicle in front, which are all obtained via sensors such as a radio detection and ranging (radar), cameras, etc.

In platooning technology, data communication is performed between a plurality of vehicles by using a communication method based on dedicated short-range communications (DSRC) and V2X-based vehicle-to-vehicle communication. Communication between a plurality of vehicles during platooning may be accomplished using not only V2X communication but also 5th generation (5G) millimeter wave (mmWave) or 5G sub-6 communication, and using the 5G mmWave or 5G sub-6 communication allows for faster transmission and reception of traffic information and surrounding situations.

During platooning, it is inefficient in terms of network efficiency and communication costs for a plurality of vehicles to all directly communicate with a base station. As a method of solving the problems of network efficiency and communication costs, a method has been used in which a leader vehicle (or a master vehicle) performs data communication with a base station (BS), and a plurality of follower vehicles (or slave vehicles) connect to the network and perform data communication with the leader vehicle by using a device-to-device (D2D) communication method. In this case, the master vehicle may perform data communication with the base station by using a 5G mmWave communication method. The 5G mmWave communication method may provide high-speed data communication, but during platooning, signals at mmWave frequencies use narrow beams configured via beam adjustment between the BS and a user equipment (UE), which may cause signal propagation problems, such as path loss and non-line-of-sight (NLoS).

MYOUNGGYU WON: "L-Platooning: A Protocol for Managing a Long Platoon with DSRC", ARXIV.ORG, CORNELL UNIVERSITY LIBRARY, 201 OLIN LIBRARY CORNELL UNIVERSITY ITHACA, NY 14853, 23 March 2021, discloses a platooning protocol that enables seamless, reliable, and rapid formation of a long platoon. A virtual leader is identified, which is a vehicle that acts as a platoon leader to extend the coverage of the original platoon leader.

US 2020/090521 A1 discloses a method in which several vehicles, which perform platooning in an autonomous driving system (Autonomous Driving System), pass a target vehicle, in which the several vehicles constituting a platoon include a first vehicle con trolling platooning and a second vehicle controlled by the first vehicle, and the first vehicle checks information of the platoon and determines a passing operation of the platoon on the basis of the platoon information received from the server and information about the out-platoon vehicles, thereby being able to control the vehicles performing the platooning to pass the target vehicles.

US 2020/402407 A1 discloses systems and methods for increasing the efficiency of vehicle platooning systems. In an aspect, drivers are more likely to enjoy a system if it begins platooning as desired and does not accidentally end platoons. When a certain amount of data packets sent between vehicles are dropped, systems typically will either not engage in a platoon or end a current platoon. When a platoon has a very small gap between vehicles, the platoon should end-or not start, when a certain amount of packets are dropped. However, if a gap is large enough to provide a driver with more time to react, a system may accept a greater amount of dropped packets before it refuses to start a platoon or causes the end of a platoon.

### Disclosure

### Technical Solution

The present invention is defined by the appended set of claims. Preferred embodiments are defined by the dependent claims. According to an aspect of the present disclosure, an operation method of an electronic device mounted on a master vehicle among a plurality of vehicles traveling in a platoon is provided. According to an embodiment of the present disclosure, the operation method of the electronic device may include performing, as a first master device, data communication with a base station, and performing data communication with a plurality of slave devices by using a device-to-device (D2D) communication method. According to an embodiment of the present disclosure, the operation method of the electronic device may include determining whether an additional master device is required, based on data throughput from data communications with the base station and the plurality of slave devices. According to an embodiment of the present disclosure, the operation method of the electronic device may include determining, based on a result of the determining, a second master device, from among the plurality of slave devices, which is to perform data communication with the base station.

According to another aspect of the present disclosure, there is provided an electronic device mounted on a master vehicle among a plurality of vehicles traveling in a platoon, and operating as a first master device. According to an embodiment of the present disclosure, the electronic device may include the communication interface configured to perform data transmission and reception with a base station and perform, via D2D communication, data communication with a plurality of slave devices respectively mounted on the plurality of vehicles, the memory storing one or more instructions related to a function or operation of the electronic device, and at least one processor configured to execute the one or more instructions stored in the memory. The at least one processor may be configured to monitor, via the communication interface, data throughput from data communications with the base station and the plurality of slave devices. The at least one processor may be configured to determine, based on the monitored data throughput, whether an additional master device is required. The at least one processor may be configured to determine, based on a result of the determining, a second master device, from among the plurality of slave devices, which is to perform data communication with the base station.

According to another aspect of the present disclosure, there is provided a computer-readable storage medium having recorded thereon a program to be executed on a computer. The storage medium may include instructions that are readable by an electronic device, which is mounted on a master vehicle among a plurality of vehicles travelling in a platoon, to perform, as a first master device, data communication with a base station and perform, through a D2D communication method, data communication with a plurality of slave devices on the plurality of vehicles traveling in the platoon, determine whether an additional master device is required, based on data throughput from data communications with the base station and the plurality of slave devices, and determine, based on a result of the determining, a second master device, from among the plurality of slave devices, which is to perform data communication with the base station.

### Description of Drawings

The present disclosure will be easily understood from the following description taken in conjunction with the accompanying drawings in which reference numerals denote structural elements.
FIG. 1 is a conceptual diagram illustrating an operation in which an electronic device determines an additional master device based on data throughput from data communications with a base station and a plurality of slave devices, according to an embodiment of the present disclosure.
FIG. 2 is a block diagram illustrating components of an electronic device according to an embodiment of the present disclosure.
FIG. 3 is a flowchart of an operation method of an electronic device, according to an embodiment of the present disclosure.
FIG. 4 is a flowchart of a method, performed by an electronic device, of determining whether an additional master device is required, according to an embodiment of the present disclosure.
FIG. 5A is a diagram illustrating an operation in which an electronic device determines an additional master device from among a plurality of slave devices, according to an embodiment of the present disclosure.
FIG. 5B is a diagram illustrating an operation in which an electronic device determines a plurality of additional master devices from among a plurality of slave devices, according to an embodiment of the present disclosure.
FIG. 6 is a diagram illustrating an operation in which an electronic device determines an additional master device based on performance indicator value information received from a plurality of slave devices, according to an embodiment of the present disclosure.
FIG. 7 is a flowchart illustrating operations of an electronic device, a first slave device, a second slave device, and a base station, according to an embodiment of the present disclosure.
FIG. 8 is a diagram illustrating an operation in which an electronic device determines an additional master device based on a distance between a plurality of vehicles traveling in a platoon, according to an embodiment of the present disclosure.
FIG. 9 is a flowchart illustrating operations of an electronic device, a first slave device, a second slave device, and a base station, according to an embodiment of the present disclosure.
FIG. 10 is a diagram for describing operations performed by an electronic device using artificial intelligence (AI) technology, according to the present disclosure.
FIG. 11 is a diagram illustrating an embodiment in which an electronic device of the present disclosure operates in conjunction with a server.
FIG. 12 is a diagram for describing FIG. 11 in detail.

### Mode for Invention

As the terms used in embodiments of the present specification, general terms that are currently widely used are selected by taking functions in the present disclosure into account, but the terms may be changed according to an intention of one of ordinary skill in the art, precedent cases, advent of new technologies, etc. Furthermore, specific terms may be arbitrarily selected by the applicant, and in this case, the meaning of the selected terms will be described in detail in the detailed description of a corresponding embodiment. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by a person of ordinary skill in the art described in the present specification.

Throughout the present disclosure, when a part "includes" or "comprises" an element, unless there is a particular description contrary thereto, it is understood that the part may further include other elements, not excluding the other elements. Furthermore, terms, such as "portion," "module," etc., used herein indicate a unit for processing at least one function or operation, and may be implemented as hardware or software or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, in the present disclosure, it should be understood that when a component is referred to as being "connected" or "coupled" to another component, the component may be directly connected or coupled to the other component, but may also be connected or coupled to the other component via another intervening component therebetween unless there is a particular description contrary thereto.

As used in the present disclosure, a 'vehicle' is a means of transportation that travels on a road or track. The vehicle may be a concept that includes an internal combustion engine vehicle having an engine as a power source, a hybrid vehicle having an engine and an electric motor as a power source, an electric vehicle having an electric motor as a power source, etc. In an embodiment of the present disclosure, the vehicle may include at least one of an automobile, a train, and a motorcycle.

As used herein, "platooning" is a driving method in which two or more vehicles are organized into a system and travel at a specified distance therebetween. Platooning uses vehicle-to-everything (V2X) or vehicle-to-vehicle (V2V) to allow a front vehicle and a rear vehicle to share vehicle control information such as acceleration, deceleration, stopping, etc. with each other, and to share information collected via various sensors installed on the vehicle in real time. Among a plurality of vehicles traveling in a platoon, a leader vehicle (or LV) (or a 'master vehicle') may transmit platooning information to at least one follower vehicle (or FV) (or a 'slave vehicle'). In an embodiment of the present disclosure, 'platooning information' may include information about at least one of a platooning region, a platooning route, a platooning destination, and an expected time of arrival at the destination. In another embodiment, the platooning information may include vehicle-related information including at least one of the number of vehicles in a platoon, a distance between vehicles, a location of the vehicles, and a speed of the vehicles.

As used in the present disclosure, a 'master device' is a device that is mounted on a leader vehicle (or a master vehicle) among a plurality of vehicles travelling in a platoon and performs data communication with a base station.

As used herein, a 'slave device' is mounted on at least one follower vehicle (or slave vehicle) among a plurality of vehicles travelling in a platoon, and is connected to a master device via device-to-device (D2D) communication to perform data communication with the master device.

An embodiment of the present disclosure will be described more fully hereinafter with reference to the accompanying drawings so that the embodiment may be easily implemented by a person of ordinary skill in the art. However, the present disclosure may be implemented in different forms and should not be construed as being limited to embodiments set forth herein.

Hereinafter, embodiments of the present disclosure are described in detail with reference to the accompanying drawings.

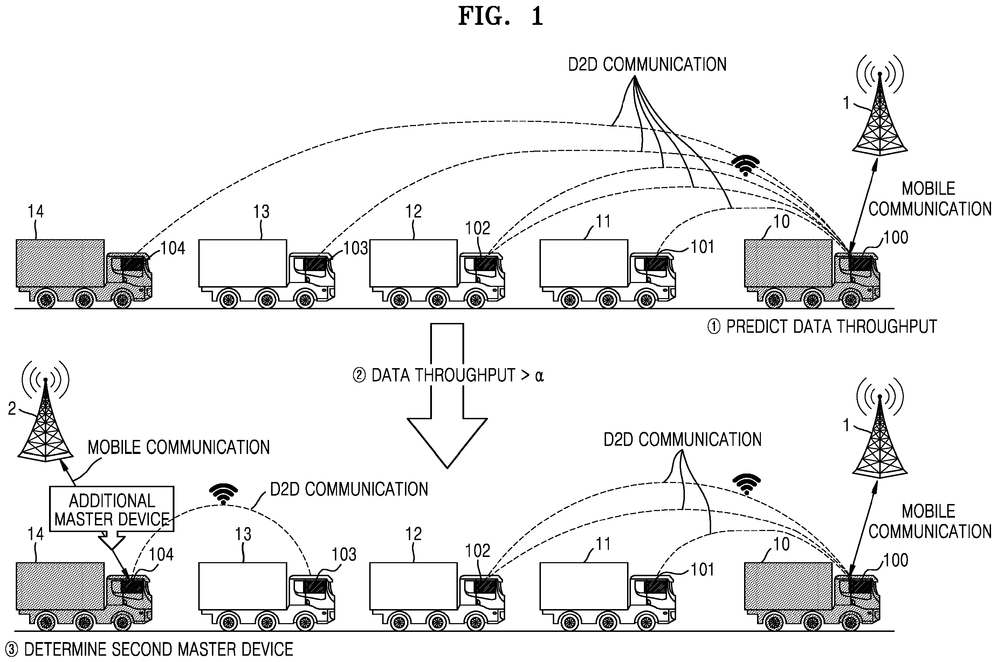

FIG. 1 is a conceptual diagram illustrating an operation in which an electronic device 100 determines an additional master device based on data throughput from data communications with a base station and a plurality of slave devices 101 to 104, according to an embodiment of the present disclosure.

Referring to FIG. 1, a plurality of vehicles 10, 11, 12, 13, and 14 may travel in a platoon. "Platooning" is a driving method in which two or more vehicles are grouped into a system and travel at a specified distance therebetween. By using V2X or V2V, the plurality of vehicles 10, 11, 12, 13, and 14 traveling in the platoon may share vehicle control information such as acceleration, deceleration, stopping, etc. with each other, and share information collected via various sensors installed on the vehicles in real time.

The electronic device 100 may be mounted on a leader vehicle (hereinafter referred to as a 'master vehicle') 10 among the plurality of vehicles 10, 11, 12, 13, and 14 traveling in the platoon. The electronic device 100 may be mounted on an external structure of the master vehicle 10 or disposed within the external structure. However, the electronic device 100 is not limited thereto, and may be mounted inside the master vehicle 10 or coupled with an electronic control unit (ECU) within the master vehicle 10.

The electronic device 100 may perform data communication with a base station 1. In an embodiment of the present disclosure, the electronic device 100 may establish a communication connection with the base station 1 by using a mobile communication method, and transmit and receive data to and from the base station 1. In an embodiment of the present disclosure, the electronic device 100 may perform data communication with the base station 1 by using a 5th generation (5G) millimeter wave (mmWave) communication method. However, the electronic device 100 is not limited thereto, and may perform data communication with the base station 1 by using any one of, for example, 5G communication based on sub 6 band, long-term evolution (LTE) communication, and 3rd generation (3G) communication. The electronic device 100 may transmit, to the base station 1, a request for data to be received, and receive the data from an external device (e.g., a server) via the base station 1.

Among the plurality of vehicles 10, 11, 12, and 13, and 14 traveling in the platoon, a plurality of follower vehicles (hereinafter referred to as 'slave vehicles') 11, 12, 13, and 14 other than the master vehicle 10 may be respectively equipped with the plurality of slave devices 101, 102, 103, and 104. The plurality of slave devices 101, 102, 103, and 104 may each be connected to the electronic device 100 via D2D communication and perform data communication with the electronic device 100. In this case, the electronic device 100 may operate as a master device that performs a communication relay function between the base station 1 and each of the plurality of slave devices 101, 102, 103, and 104. 'D2D communication' refers to a communication method that enables direct communication between devices without going through a network infrastructure such as the base station 1 or an access point (AP). The D2D communication may include, but is not limited to, at least one of communication methods including, for example, Wi-Fi Direct (WFD), mobile Bluetooth, LTE-D2D, and 5G D2D.

Each of the plurality of slave devices 101, 102, 103, and 104 may transmit a request for data to be received to the electronic device 100, which is the master device, via D2D communication. After receiving, from the base station 1, data required by the plurality of slave devices 101, 102, 103, and 104, the electronic device 100 may transmit the data to the plurality of slave devices 101, 102, 103, and 104 via D2D communication.

**The** electronic device 100 may transmit platooning information to the plurality of slave devices 101, 102, 103, and 104 via D2D communication. In an embodiment of the present disclosure, 'platooning information' may include information about at least one of a platooning region, a platooning route, a platooning destination, and an expected time of arrival at the destination. In another embodiment, the platooning information may include vehicle-related information including at least one of the number of vehicles in the platoon, a distance between vehicles, a location of the vehicles, and a speed of the vehicles. The electronic device 100 may control driving of the plurality of slave vehicles 11, 12, 13, and 14 by transmitting the platooning information to the plurality of slave devices 101, 102, 103, and 104.

In operation ①, the electronic device 100 may predict data throughput from data communications with the base station 1 and the plurality of slave devices 101, 102, 103, and 104. In an embodiment of the present disclosure, the electronic device 100 may predict total data throughput by monitoring the amount of data usage when transmitting and receiving data to and from the base station 1 and the amount of data usage when transmitting and receiving data via the communication relay function to and from the plurality of slave devices 101, 102, 103, and 104.

In operation ②, the electronic device 100 may compare the predicted data throughput with a preset threshold α and determine whether an additional master device is required based on a result of the comparison. In an embodiment of the present disclosure, the electronic device 100 may determine that an additional master device is required when the data throughput exceeds a preset threshold α. The preset threshold α for data throughput may be, for example, 5 gigabits per second (Gbps) or 10 Gbps, but this is only an example of a value and is not limited thereto.

In operation ③, the electronic device 100 may determine one of the plurality of slave devices 101, 102, 103, and 104 as an additional master device according to a determination result. When the electronic device 100 determines an additional master device from among the plurality of slave devices 101, 102, 103, and 104, the electronic device 100 may be a first master device, and an additional master device may be a second master device. In an embodiment of the present disclosure, the electronic device 100 may respectively receive performance indicator values of communication signals related to base stations 1 and 2 from the plurality of slave devices 101, 102, 103, and 104, and determine the second master device based on the received performance indicator values. A 'performance indicator value of a communication signal' is an indicator indicating communication quality through the status of transmission and reception of a data communication signal (e.g., a reference signal) with the base station 1 or 2, and may include, for example, at least one of reference signal received power (RSRP), received signal strength indicator (RSSI), reference signal received quality (RSRQ), and signal-to-interference-plus-noise ratio (SINR). The electronic device 100 may determine a slave device with a maximum value among the performance indicator values for the plurality of slave devices 101, 102, 103, and 104 as being the second master device.

In the embodiment shown in FIG. 1, the electronic device 100 may determine the fourth slave device 104 among the plurality of slave devices 101, 102, 103, and 104 as being the second master device. However, the present disclosure is not limited thereto, and the electronic device 100 may also determine two or more slave devices among the plurality of slave devices 101, 102, 103, and 104 as being the second master device.

The electronic device 100 may transmit, to the fourth slave device 104, a master device determination signal indicating that it has been determined as the second master device. Once the second master device is determined, the remaining slave devices 101, 102, and 103 may be connected to either the first master device (the electronic device 100 in the embodiment shown in FIG. 1) or the second master device (the fourth slave device 104 in the embodiment shown in FIG. 1) via D2D communication based on a distance between the devices and perform data communication therewith. In the embodiment shown in FIG 1, the first slave device 101 and the second slave device 102 may be connected to the electronic device 100, which is the first master device, via D2D communication to perform data communication, and the third slave device 103 may be connected to the fourth slave device 104, which is determined to be the second master device, via D2D communication to perform data communication.

The second master device only transmits and receives data with at least one slave device via D2D communication, but does not have the authority to control the driving of a slave vehicle where the at least one slave device is mounted.

In general, it is inefficient in terms of network efficiency and communication costs for all of the plurality of vehicles 10, 11, 12, 13, and 14 to perform direct data communication with the base stations 1 and 2 during platooning. As a method of solving the problems of network efficiency and communication costs, a method may be used in which the electronic device 100, as a master device, mounted on the master vehicle 10 performs data communication with the base station 1 , and the plurality of slave devices 101, 102, 103, and 104 respectively mounted on the plurality of slave vehicles 11, 12, 13, and 14 each connect to a network via D2D communication to perform data communication with the electronic device 100 that is the master device. In this case, the electronic device 100 may perform data communication with the base station via 5G mmWave communication. Because the 5G mmWave communication uses a narrow beam configured via beam adjustment between the base station 1 and the electronic device 100 according to the frequency characteristics of a high frequency of 20 gigahertz (GHz) or higher, signal propagation problems such as path loss and non-line-of-sight (NLoS) may occur during platooning. In addition, when the electronic device 100 mounted on the master vehicle 10 performs data communication with the base station 1 via the 5G mmWave communication for a long period of time during platooning, performance degradation due to heat generation occurs and data throughput increases as the number of follower vehicles increases, which may result in deterioration of data communication quality and efficiency.

The present disclosure aims to provide an electronic device mounted on one of a plurality of vehicles traveling in a platoon and adjusting the number of master devices for performing data communication with a base station in order to improve the efficiency and quality of data communication between the plurality of vehicles, and an operation method of the electronic device.

According to an embodiment of the present disclosure, the electronic device 100 predicts data throughput from data communication with the base station 1 and the plurality of slave devices 101, 102, 103, and 104, and when the predicted data throughput exceeds the preset threshold α, and determines one of the plurality of slave devices 101, 102, 103, and 104 (in the embodiment shown in FIG. 1, the fourth slave device 104) as an additional master device, thereby providing technical effects of improving the efficiency of data usage and reducing power consumption and heat generation. Furthermore, according to an embodiment of the present disclosure, the electronic device 100 performs a communication relay function for the plurality of slave devices 101, 102, and 103 in conjunction with an additional master device (the fourth slave device 104 in the embodiment shown in FIG. 1), thereby solving the problem of accessing shaded regions due to communication connections with the base station 2 far from the electronic device 100 rather than the base station 1 adjacent thereto.

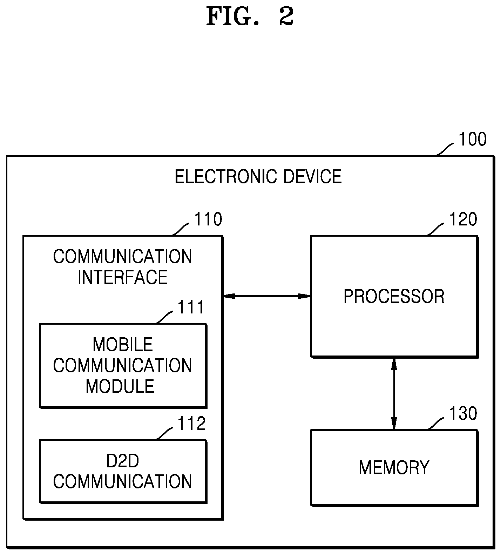

FIG. 2 is a block diagram illustrating components of the electronic device 100 according to an embodiment of the present disclosure.

The electronic device 100 may be mounted inside a vehicle or on an external structure of the vehicle. In an embodiment, the electronic device 100 may include one or more electronic circuits that constitute an ECU inside the vehicle. However, the electronic device 100 is not limited thereto.

Referring to FIG. 2, the electronic device 100 may include a communication interface 110, a processor 120, and a memory 130. The communication interface 110, the processor 120, and the memory 130 may be electrically and/or physically connected to each other.

The components shown in FIG. 2 are only in accordance with an embodiment of the present disclosure, and the components included in the electronic device 100 are not limited to those shown in FIG. 2. The electronic device 100 may not include some of the components shown in FIG. 2, and may further include components not shown in FIG. 2. For example, the electronic device 100 may further include a navigation device or an infotainment system.

The communication interface 110 is a hardware device configured to connect to a base station or a plurality of slave devices to transmit and receive data. The communication interface 110 may include at least one of an antenna and a radio frequency (RF) circuit and an RF element capable of implementing at least one communication protocol in order to perform wireless data communication. In an embodiment of the present disclosure, the communication interface 110 may include at least one external antenna for wireless communication with a base station and at least one antenna for performing a communication relay function by connecting to a plurality of slave devices via D2D communication.

The communication interface 110 may include a mobile communication module 111 and a D2D communication module 112.

The mobile communication module 111 is a hardware communication device configured to transmit and receive data with a base station via mobile communication. In an embodiment of the present disclosure, the mobile communication module 111 may include a 5G mmWave communication module that connects to the base station via 5G mmWave communication scheme and transmits and receives data via a communication channel formed with the base station. The 5G mmWave communication module may include an antenna array, a radio transceiver, and a power management circuit. Although not shown in FIG. 2, the 5G mmWave communication module may further include at least one of an radio frequency integrated circuit (RFIC), a power amplifier, an attenuator, a converter, and a temperature sensor.

However, the present disclosure is not limited thereto, and the mobile communication module 111 may include a communication module that performs data communication with the base station by using at least one communication method among 5G sub-6 communication, LTE communication, and 3G communication.

The D2D communication module 112 is a hardware communication device that is connected to a plurality of slave devices via D2D communication and is configured to transmit and receive data via the D2D communication. The D2D communication module 112 may perform data communication with the plurality of slave devices via the D2D communication without the need for a server, a gateway, or other relay device. The D2D communication module 112 may perform a connection with a plurality of slave devices and transmit and receive data with the plurality of slave devices via at least one of the communication methods including, for example, WFD, mobile Bluetooth, LTE-D2D, and 5G D2D. In an embodiment of the present disclosure, the D2D communication module 112 may transmit and receive data with a plurality of slave devices respectively mounted on a plurality of slave vehicles, other than a master vehicle, among a plurality of vehicles traveling in a platoon.

The processor 120 may execute one or more instructions of a program stored in the memory 130. The processor 120 may be composed of hardware components that perform arithmetic, logic, and input/output (I/O) operations, and signal processing. The processor 120 may consist of at least one of, for example, a CPU, a microprocessor, a graphics processing unit (GPU), application specific integrated circuits (ASICs), digital signal Processors (DSPs), digital signal processing devices (DSPDs), programmable logic devices (PLDs), and field programmable gate arrays (FPGAs), but is not limited thereto.

The processor 120 is shown as an element in FIG. 2, but is not limited thereto. In an embodiment, the processor 120 may be configured as a single processor or a plurality of processors. The processor according to an embodiment of the present disclosure may include various processing circuitry and/or multiple processors. For example, as used herein, including in the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs some other of the recited functions, and also situations in which a single processor may perform all the recited functions. Additionally, the at least one processor may include a combination of processors performing various functions from among the recited /disclosed functions, e.g., in a distributed manner. At least one processor may execute program instructions to achieve or perform various functions.

In an embodiment of the present disclosure, the processor 120 may include an artificial intelligence (AI) processor that performs Al training. In this case, the Al processor may perform inference using an Al model. The Al processor may be manufactured in the form of a dedicated hardware chip for Al, or be manufactured as part of an existing general-purpose processor (e.g., a CPU or AP) or a dedicated graphics processor (e.g., a GPU). In another embodiment of the present disclosure, the Al processor may be mounted on an external server.

The memory 130 may include at least one type of storage medium among, for example, a flash memory-type memory, a hard disk-type memory, a multimedia card micro-type memory, a card-type memory (e.g., an Secure Digital (SD) card or an eXtreme Digital (XD) memory), random access memory (RAM), static RAM (SRAM), read-only memory (ROM), electrically erasable programmable ROM (EEPROM), PROM, a magnetic memory, a magnetic disc, or an optical disc.

The memory 130 may store at least one of instructions, algorithms, data structures, program code, and application programs readable by the processor 120. The instructions, algorithms, data structures, and program code stored in the memory 130 may be implemented in programming or scripting languages such as C, C++, Java, assembler, etc.

In the following embodiments, the processor 120 may be implemented by executing instructions or program code stored in the memory 130.

The processor 120 may perform data communication with the base station via the mobile communication module 111. In an embodiment of the present disclosure, the processor 120 may perform data communication with the base station by using 5G mmWave communication via the mobile communication module 111. The processor 120 may perform data communication with the plurality of slave devices by using D2D communication via the D2D communication module 112. In this case, the electronic device 100 may operate as a master device performing a communication relay function.

The processor 120 may determine whether an additional master device is required based on data throughput from data communications with the base station and the plurality of slave devices. The processor 120 may predict data throughput by monitoring the amount of data transmitted to and received from the base station via the mobile communication module 111 and the amount of data transmitted to and received from the plurality of slave devices via the D2D communication module 112. In an embodiment of the present disclosure, the processor 120 may calculate an expected data throughput via an arithmetic operation that multiplies the number of the plurality of slave devices connected to the D2D communication module 112 by the amount of current data usage on each of the plurality of slave devices. In an embodiment of the present disclosure, the processor 120 may calculate an expected data throughput by further including, in data throughput obtained by multiplying the number of the plurality of slave devices connected to the D2D communication module 112 by the amount of current data usage per slave device, the amount of data usage for transmitting platooning information for controlling platooning of the plurality of slave vehicles (e.g., information about at least one of a platooning region, a platooning route, a platooning destination, and an expected time of arrival at the destination). In another embodiment, the processor 120 may also calculate the expected data throughput by further including the amount of data usage required for high-resolution map data (e.g., high-definition (HD) maps) for controlling platooning over the plurality of slave vehicles, or for over-the-air (OTA) vehicle operating system updates.

The processor 120 may compare the expected data throughput with a preset threshold and determine whether an additional master device is required based on a result of the comparison. The 'preset threshold' refers to a threshold value of data throughput at which the electronic device 100 is capable of performing a communication relay function between the base station and the plurality of slave devices for efficiency of data usage and network access. For example, the preset threshold may be 5 Gbps or 10 Gbps, but is not limited thereto. When the expected data throughput exceeds the preset threshold, the processor 120 may determine that an additional master device is required. When the expected data throughput is less than the preset threshold, the processor 120 may determine that an additional master device is not required.

When determining that the additional master device is required, the processor 120 may determine one of the plurality of slave devices as the additional master device. In this case, the electronic device 100 may operate as a first master device, and the additional master device may operate as a second master device. The second master device may perform data communication with a base station, and perform data communication with the remaining slave devices excluding the second master device among the plurality of slave devices by using a D2D communication method.

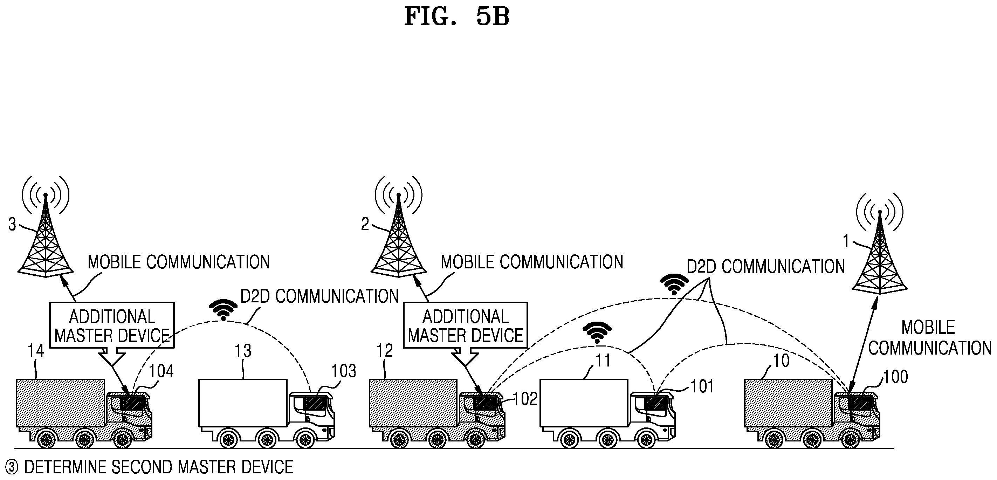

The processor 120 determines one of the plurality of slave devices as the second master device, but is not limited thereto. In an embodiment of the present disclosure, the processor 120 may determine one or more slave devices from among the plurality of slave devices to be the second master device. An embodiment in which the processor 120 determines a plurality of slave devices as the second master device is described in detail with reference to FIG. 5B.

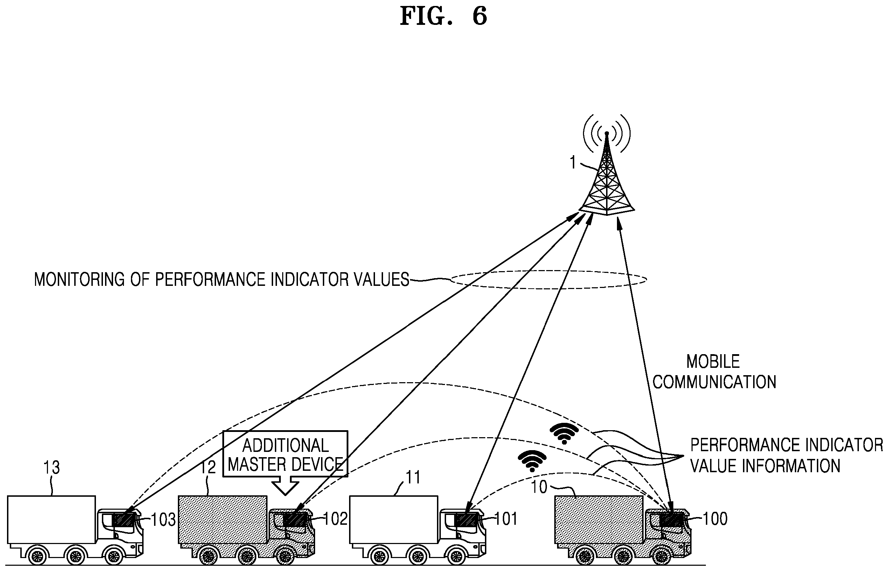

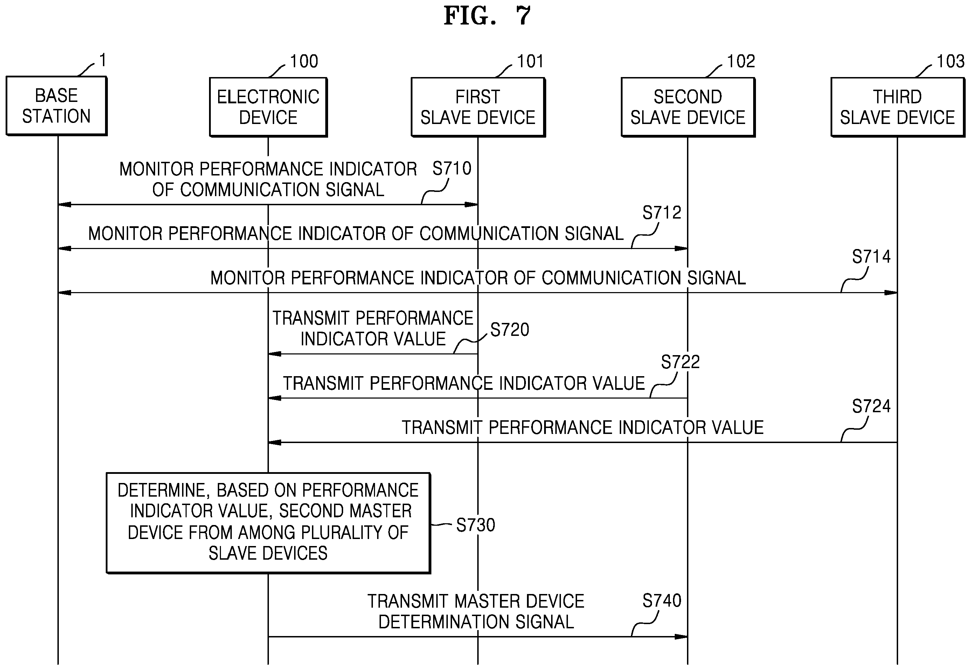

The processor 120 may determine the second master device based on performance indicator values of signals related to the base station for each of the plurality of slave devices. In an embodiment of the present disclosure, the processor 120 may respectively receive, via the D2D communication module 112, from the plurality of slave devices, performance indicator values of signals related to the base station for each of the plurality of slave devices. A performance indicator value is an indicator indicating the strength and stability of a signal transmitted to and received from a base station, and may include, for example, at least one of RSRP, RSSI, RSRQ and SINR. The processor 120 may determine a slave device corresponding to a maximum value among the performance indicator values as the second master device. A specific embodiment in which the processor 120 determines the second master device based on performance indicator values for each of the plurality of slave devices is described in detail with reference to FIGS. 6 and 7.

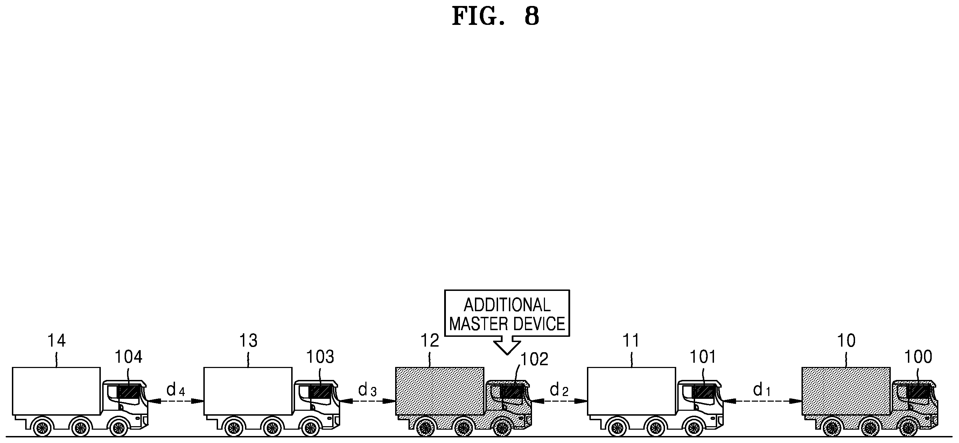

The processor 120 may determine a second master device based on information about distances of each of the plurality of vehicles to the other vehicles traveling in the platoon and the other vehicles. In an embodiment, the processor 120 may obtain information about distances of each of the plurality of slave vehicles to the other slave vehicles, calculate an average value of the obtained distances of each of the plurality of slave devices to the other vehicles, and determine a slave device mounted on a slave vehicle with a minimum calculated average value of the distances to be the second master device. A specific embodiment in which the processor 120 determines the second master device based on a distance between vehicles is described in detail with reference to FIG. 8.

The processor 120 may control the communication interface 110 to transmit a master device determination signal to the slave device determined to be the second master device. The 'master device determination signal' is a signal indicating that the slave device has been determined to be the second master device. In an embodiment of the present disclosure, the processor 120 may transmit the master device determination signal to the second master device via the D2D communication module 112.

In an embodiment of the present disclosure, the processor 120 may transmit information for establishing a communication connection with the plurality of slave devices to the second master device via the D2D communication module 112. For example, the processor 120 may transmit, to the second master device, at least one of, for example, identification information of the plurality of slave devices, Internet Protocol (IP) address information thereof, and size information of previously received data among data required by the plurality of slave devices.

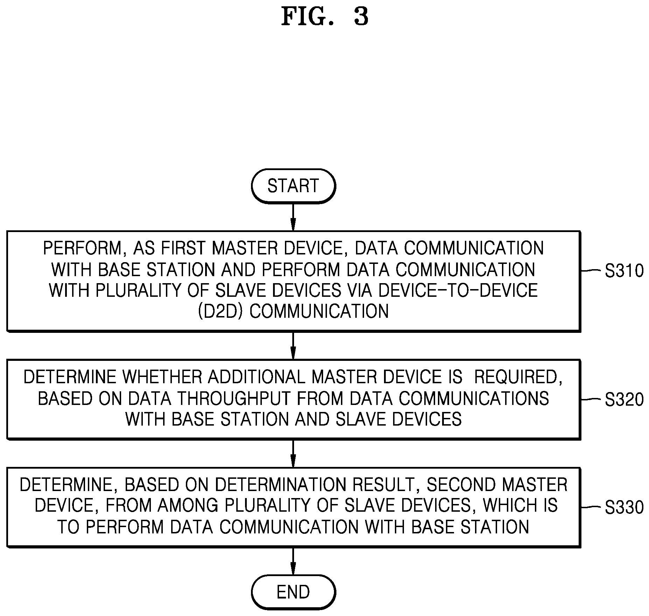

FIG. 3 is a flowchart of an operation method of the electronic device 100, according to an embodiment of the present disclosure.

In operation S310, the electronic device 100 as a first master device performs data communication with a base station and performs data communication with a plurality of slave devices via D2D communication. The electronic device 100 may establish a communication connection with the base station by using a mobile communication method, and transmit and receive data to and from the base station. In an embodiment of the present disclosure, the electronic device 100 may perform data communication with the base station by using a 5G mmWave communication method. However, the electronic device 100 is not limited thereto, and may perform data communication with the base station by using any one of, for example, 5G communication based on sub-6 band, LTE communication, and 3G communication.

The electronic device 100 may perform, through a D2D communication method, data communication with the plurality of slave devices respectively mounted on a plurality of slave vehicles, other than a master vehicle, among a plurality of vehicles traveling in a platoon. The electronic device 100 may perform data communication with the plurality of slave devices by using at least one of the communication methods including, for example, WFD, mobile Bluetooth, LTE-D2D, and 5G D2D. In this case, the electronic device 100 may perform a communication relay function for data communication between the base station and each of the plurality of slave devices.

In operation S320, the electronic device 100 determines whether an additional master device is required based on data throughput from data communications with the base station and the plurality of slave devices. The electronic device 100 may predict data throughput by monitoring the amount of data transmitted to and received from the base station via the mobile communication module (111 of FIG. 2) and the amount of data transmitted to and received from the plurality of slave devices via the D2D communication module (112 of FIG. 2). The electronic device 100 may compare the predicted data throughput with a preset threshold and determine whether an additional master device is required based on a result of the comparison. The preset threshold may be, for example, 5 Gbps or 10 Gbps, but is not limited thereto.

When the data throughput exceeds the preset threshold, the electronic device 100 may determine that an additional master device is required. When the data throughput is less than the preset threshold, the processor 120 may determine that an additional master device is not required.

In operation S330, the electronic device 100 determines, based on a determination result, a second master device that is to perform data communication with the base station from among the plurality of slave devices. The electronic device 100 determines one of the plurality of slave devices as the second master device, but is not limited thereto. In an embodiment of the present disclosure, the processor 120 may determine one or two or more slave devices among the plurality of slave devices to be the second master device.

The electronic device 100 may transmit a master device determination signal to a slave device determined to be the second master device. The 'master device determination signal' is a signal indicating that it has been determined as the second master device. In an embodiment of the present disclosure, the electronic device 100 may transmit the master device determination signal to the second master device via the D2D communication module 112.

The second master device may perform data communication with a base station, and perform data communication with the remaining slave devices excluding the second master device among the plurality of slave devices by using a D2D communication method.

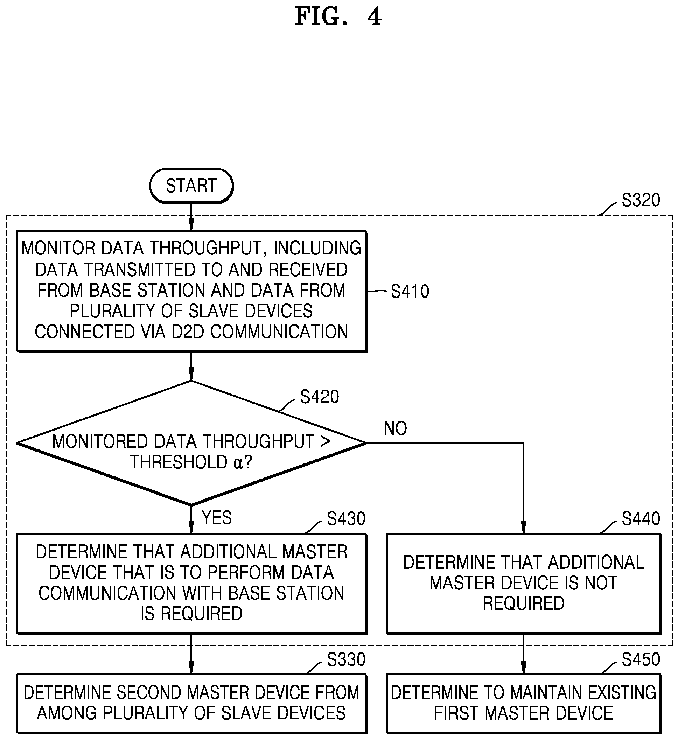

FIG. 4 is a flowchart of a method, performed by the electronic device 100, of determining whether an additional master device is required, according to an embodiment of the present disclosure.

Operations S410 to S440 among operations illustrated in FIG. 4 are detailed operations of operation S320 illustrated in FIG. 3. Operation S410 of FIG. 4 may be performed after operation S310 illustrated in FIG. 3 is performed.

In operation S410, the electronic device 100 monitors data throughput, including data transmitted to and received to and from the base station and data from the plurality of slave devices connected via the D2D communication. The electronic device 100 may predict data throughput by monitoring the amount of data transmitted to and received from the base station via the mobile communication module (111 of FIG. 2) and the amount of data transmitted to and received from the plurality of slave devices via the D2D communication module (112 of FIG. 2). In an embodiment of the present disclosure, the electronic device 100 may calculate an expected data throughput via an arithmetic that multiplies the number of the plurality of slave devices connected to the D2D communication module 112 by the amount of current data usage on each of the plurality of slave devices. In an embodiment of the present disclosure, the electronic device 100 may calculate an expected data throughput by further including, in data throughput obtained by multiplying the number of the plurality of slave devices connected to the D2D communication module 112 by the amount of current data usage per slave device, the amount of data usage for transmitting platooning information for controlling platooning of the plurality of slave vehicles (e.g., information about at least one of a platooning region, a platooning route, a platooning destination, and an expected time of arrival at the destination).

In operation S420, the electronic device 100 compares the monitored data throughput with a preset threshold α. The 'preset threshold α' refers to a threshold value of data throughput at which the electronic device 100 is capable of performing a communication relay function between the base station and the plurality of slave devices for efficiency of data usage and network access. For example, the preset threshold may be 5 Gbps or 10 Gbps, but is not limited thereto.

As a result of the comparison, when the data throughput exceeds the preset threshold α (operation S430), the electronic device 100 determines that an additional master device that is to perform data communication with the base station is required.

In operation S330, the electronic device 100 determines a second master device from among the plurality of slave devices.

As a result of the comparison, when the data throughput is less than the preset threshold α (operation S440), the electronic device 100 determines that an additional master device is not required.

In operation S450, the electronic device 100 determines to maintain the existing first master device. The electronic device 100 may perform a communication relay function between the base station and the plurality of slave devices as the first master device without determining an additional master device.

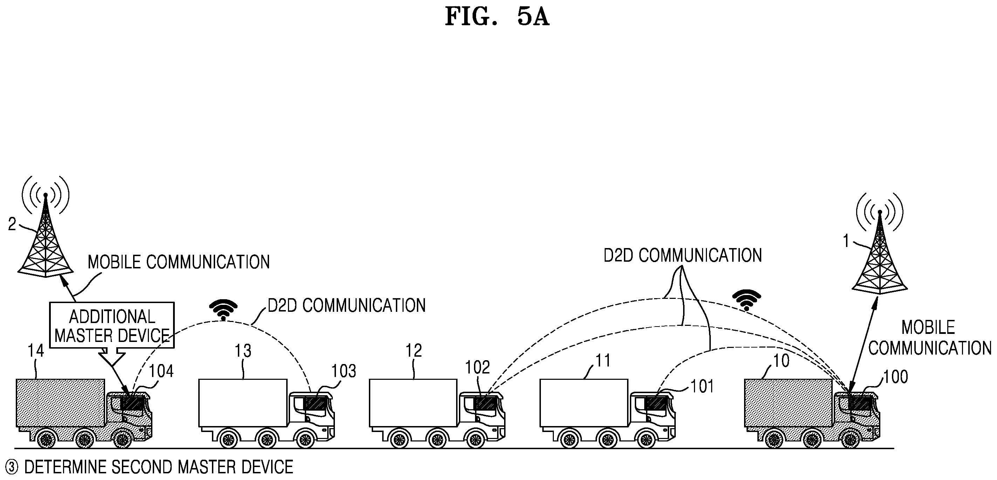

FIG. 5A is a diagram illustrating an operation in which the electronic device 100 determines an additional master device from among a plurality of slave devices 101, 102, 103, and 104, according to an embodiment of the present disclosure.

Referring to FIG. 5A, a plurality of vehicles 10, 11, 12, 13, and 14 may travel in a platoon. The electronic device 100 may be mounted on the master vehicle 10 among the plurality of vehicles 10, 11, 12, 13, and 14 traveling in the platoon. The electronic device 100 may perform data communication with a base station 1. In an embodiment of the present disclosure, the electronic device 100 may perform data communication with the base station 1 by using a 5G mmWave communication method. However, the electronic device 100 is not limited thereto, and may perform data communication with the base station 1 by using any one of 5G communication based on sub-6 band, LTE communication, and 3G communication.

The electronic device 100 may perform data communication with the plurality of slave devices 101, 102, 103, and 104 respectively mounted on the plurality of slave vehicles 11, 12, 13, and 14 excluding the master vehicle 10 among the plurality of vehicles 10, 11, 12, 13, and 14 by using a D2D communication method. The electronic device 100 may monitor data throughput from data communication with the base station 1 and the plurality of slave devices 101, 102, 103, and 104, and determine an additional master device when the monitored data throughput exceeds a preset threshold. In the embodiment illustrated in FIG. 5A, the electronic device 100 may determine, among the plurality of slave devices 101, 102, 103, and 104, the fourth slave device 104 as an additional master device. In this case, the electronic device 100 may operate as a first master device, and the fourth slave device 104 may operate as a second master device. The fourth slave device 104 as the second master device may perform data communication with a base station 2.

Based on a positional relationship of the vehicles on which the remaining slave devices 101, 102, and 103, except for the fourth slave device 104 determined as the second master device, are mounted, the electronic device 100 may determine a master device to which the slave devices 101, 102, and 103 are to connect via D2D communication from among the first master device (the electronic device 100 in the embodiment shown in FIG. 5A) and the second master device (the fourth slave device 104 in the embodiment shown in FIG. 5A). Referring to the embodiment illustrated in FIG. 5A, the electronic device 100 may perform, through a D2D communication method, data communication with the first slave device 101 and the second slave device 102 respectively mounted on the first slave vehicle 11 and the second slave vehicle 12 which are travelling at locations adjacent to the master vehicle 10 among the plurality of slave vehicles 11, 12, and 13. The electronic device 100 may determine that the third slave device 103 mounted on the third slave vehicle 13 that is traveling at a location adjacent to the fourth slave vehicle 14 equipped with the fourth slave device 104 determined as the second master device, from among the plurality of slave vehicles 11, 12, and 13, performs data communication with the second master device via D2D communication. Because the shorter the distance between communication devices, the better the speed and quality of D2D communication, the electronic device 100 may determine a slave device to be connected to each of the first master device and the second master device via D2D communication, based on distances between each of the plurality of slave vehicles 11, 12, and 13 and the master vehicle 10 and between each of the plurality of slave vehicles 11, 12, and 13 and a second master vehicle (the fourth slave vehicle 14 in the embodiment illustrated in FIG. 5A).

In another embodiment of the present disclosure, by transmitting, to the slave devices 101, 102, and 103, a master device determination signal indicating that the fourth slave device 104 has been determined as the second master device, the electronic device 100 may allow the slave devices 101, 102, and 103 to independently determine a master device with which to perform data communication via D2D communication. In this case, the slave devices 101, 102, and 103 may select a master device from which to request data based on the distance between each of the plurality of slave vehicles 11, 12, and 13 and the master vehicle 10 and the distance between each of the plurality of slave vehicles 11, 12, and 13 and the second master vehicle (the fourth slave vehicle 14 in the embodiment illustrated in FIG. 5A), or select a master device with a greater signal strength according to D2D communication.

FIG. 5B is a diagram illustrating an operation in which the electronic device 100 determines a plurality of additional master devices from among the plurality of slave devices 101, 102, 103, and 104, according to an embodiment of the present disclosure.

Referring to FIG. 5B, the electronic device 100 may determine, among the plurality of slave devices 101, 102, 103, and 104, a plurality of slave devices 102 and 104 as additional master devices. The embodiment of FIG. 5B is the same as the embodiment of FIG. 5A except that the electronic device 100 determines the two slave devices 102 and 104 as additional master devices, and thus, descriptions already provided with respect to FIG. 5A are omitted.

In the embodiment illustrated in FIG. 5B, the electronic device 100 may determine the second slave device 102 as a second master device and the fourth slave device 104 as a third master device. The second slave device 102 determined as the second master device may perform data communication with the base station 2 via mobile communication. The second master device may be connected to the first slave device 101 mounted on the first slave vehicle 11 traveling at a location adjacent to the second slave vehicle 12 via D2D communication, and perform data communication with the first slave device 101. The second slave device 102 determined as the third master device may perform data communication with a base station 3 via mobile communication. The third master device may be connected to the third slave device 103 mounted on the third slave vehicle 13 traveling at a location adjacent to the fourth slave vehicle 14 via D2D communication, and perform data communication with the third slave device 103.

FIG. 6 is a diagram illustrating an operation in which the electronic device 100 determines an additional master device based on performance indicator value information received from a plurality of slave devices 101, 102, and 103, according to an embodiment of the present disclosure.

FIG. 7 is a flowchart illustrating operations of an electronic device, a first slave device, a second slave device, and a base station, according to an embodiment of the present disclosure.

Hereinafter, with reference to FIGS. 6 and 7 together, an operation in which the electronic device 100 determines an additional master device based on performance indicator value information received from the plurality of slave devices 101, 102, and 103 is described.

Referring to FIG. 6, the electronic device 100 is mounted on a master vehicle 10 among a plurality of vehicles 10, 11, 12, and 13 traveling in a platoon, and may perform data communication with a base station 1 by using a mobile communication method. The electronic device 100 may perform data communication through a D2D communication method with the plurality of slave devices 101, 102, and 103 respectively mounted on a plurality of slave vehicles 11, 12, and 13 excluding the master vehicle 10 among the plurality of vehicles 10, 11, 12, and 13 traveling in the platoon.

Each of the plurality of slave devices 101, 102, and 103 may monitor a performance indicator value of a communication signal with the base station 1. Referring to FIG. 7, in operation S710, the first slave device 101 monitors a performance indicator value of a communication signal with the base station (1 of FIG. 6). Similarly, in operation S712, the second slave device 102 monitors a performance indicator value of a communication signal with the base station 1, and in operation S714, the third slave device 103 monitors a performance indicator value of a communication signal with the base station 1. Here, a 'performance indicator value of a communication signal' is an indicator indicating communication quality through the status of transmission and reception of a data communication signal (e.g., a reference signal) to and from the base station 1, and may include, for example, at least one of RSRP, RSSI, RSRQ, and SINR. Each of the first slave device 101, the second slave device 102, and the third slave device 103 may periodically transmit a reference signal to the base station 1 according to a preset time interval, and monitor a performance indicator value of the communication signal in real time based on a received signal. Although operations S710, S712, and S714 are shown in FIG. 7 as being performed in a time sequence, this is not intended to indicate an order in which the first slave device 101, the second slave device 102, and the third slave device 103 monitor the performance indicator values of the communication signals.

Referring to FIG. 6, the electronic device 100 may receive performance indicator value information from each of the plurality of slave devices 101, 102, and 103. The processor (120 of FIG. 2) of the electronic device 100 may receive performance indicator value information from each of the plurality of slave devices 101, 102, and 103 via the D2D communication module (112 of FIG. 2). Referring to FIG. 7 together, in operation S720, the first slave device 101 transmits the performance indicator value of the communication signal to the electronic device 100. In operation S722, the second slave device 102 transmits the performance indicator value of the communication signal to the electronic device 100, and in operation S724, the third slave device 103 transmits the performance indicator value of the communication signal to the electronic device 100. Although operations S720, S722, and S724 are shown in FIG. 7 as being performed in a time sequence, this is not intended to indicate an order in which the first slave device 101, the second slave device 102, and the third slave device 103 transmit information about the performance indicator values of the communication signals to the electronic device 100. In an embodiment of the present disclosure, each of the first slave device 101, the second slave device 102, and the third slave device 103 may periodically transmit performance indicator value information to the electronic device 100 according to a preset time interval.

In operation S730, the electronic device 100 determines, based on the performance indicator values, a second master device among the plurality of slave devices 101, 102, and 103. In an embodiment of the present disclosure, the processor 120 of the electronic device 100 may identify a highest performance indicator value among the performance indicator values respectively received from the plurality of slave devices 101, 102, and 103, and select a slave device having the highest performance indicator value among the plurality of slave devices 101, 102, and 103 as a second master device. Referring to the embodiment illustrated in FIG. 6, the processor 120 may determine the second slave device 102 having the highest performance indicator value among the plurality of slave devices 101, 102, and 103 as the second master device.

In operation S740, the electronic device 100 transmits a master device determination signal to the second slave device 102 determined as the second master device. The 'master device determination signal' is a signal indicating that it has been determined as the second master device. In an embodiment of the present disclosure, the processor 120 of the electronic device 100 may transmit, via the D2D communication module (112 of FIG. 2), the master device determination signal to the second slave device 102 determined as the second master device.

The electronic device 100 may transmit information for connection with a slave device to the second master device by using the D2D communication module 112. According to an embodiment of the present disclosure, the electronic device 100 may transmit, to the second master device, pieces of information necessary for the second slave device 102 determined as the second master device to perform data communication with the first slave device 101 by using a D2D communication method. The electronic device 100 may transmit, to the second master device, at least one piece of information among, for example, identification information of the plurality of slave devices, IP address information thereof, and size information of previously received data among data required by the plurality of slave devices, which are necessary for a D2D communication connection.

In the embodiments illustrated in FIGS. 6 and 7, the electronic device 100 determines the slave device (the 'second slave device 102' in the embodiment illustrated in FIG. 6) having the highest performance indicator value of the communication signal related to the base station 1 from among the plurality of slave devices 101, 102, 103 as being an additional master device, which may provide technical effects of reducing the network load of the electronic device 100 on the base station 1 and improving the efficiency of data usage on the plurality of slave devices 101, 102, and 103.

FIG. 8 is a diagram illustrating an operation in which the electronic device 100 determines an additional master device based on a distance between a plurality of vehicles 10, 11, 12, 13, and 14 traveling in a platoon, according to an embodiment of the present disclosure.

Referring to FIG. 8, the electronic device 100 may obtain information about distances between each of a plurality of slave vehicles 11, 12, 13, and 14, excluding a master vehicle 10 among the plurality of vehicles 10, 11, 12, 13, and 14 traveling in the platoon, and the other vehicles. In an embodiment of the present disclosure, the plurality of slave vehicles 11, 12, 13, and 14 may each include a sensor capable of measuring a distance to a vehicle in front. A sensor capable of measuring a distance may include, for example, at least one of a camera, an infrared sensor, and a light detection and ranging (LiDAR) sensor. Each of a plurality of slave devices 101, 102, 103, and 104 may measure a distance to a vehicle in front by using a sensor and transmit a distance measurement value to the electronic device 100 via D2D communication. The processor (120 of FIG. 2) of the electronic device 100 may obtain, from the plurality of slave devices 101, 102, 103, and 104, information about distance measurement values related to the vehicles in front of them by using the D2D communication module (112 of FIG. 2). In the embodiment illustrated in FIG. 8, a distance of the first slave vehicle 11 equipped with the first slave device 101 from the vehicle in front of it, i.e., the master vehicle 10, may be d1. A distance between the second slave vehicle 12 equipped with the second slave device 102 and the first slave vehicle 11, which is the front vehicle of the second slave vehicle 12, may be d2, and a distance between the third slave vehicle 13 equipped with the third slave device 103 and the second slave vehicle 12, which is the front vehicle of the second slave vehicle 12, may be d3, and a distance between the fourth slave vehicle 14 equipped with the fourth slave device 104 and the third slave vehicle 13, which is the front vehicle of the fourth slave vehicle 14, may be d4.

When there are one or more vehicles between two vehicles, a length of the vehicle in the middle also needs to be taken into account. For example, a distance between the third slave vehicle 13 and the first slave vehicle 11 may be calculated as the sum of d2, d3, and a length of the second slave vehicle 12. In the same way, a distance between the fourth slave vehicle 14 and the second slave vehicle 12 may be calculated as the sum of d3, d4, and a length of the third slave vehicle 13.

The processor 120 of the electronic device 100 may calculate an average value of the distances of each of the plurality of slave vehicles 11, 12, 13, and 14 to the other vehicles, and determine a slave device mounted on a vehicle with a minimum calculated average value of the distances as being an additional master device. For example, the processor 120 may calculate an average value of distances of the second slave vehicle 12 to the other vehicles via an arithmetic operation of dividing the sum of the distances of the second slave vehicle 12 to the other vehicles, d2, d3, and d3 + d4 + the length of the third slave vehicle13, by 3. In the same manner as above, the processor 120 may calculate an average value of distances of each of the first slave vehicle 11, the third slave vehicle 13, and the fourth slave vehicle 14 to the other vehicles. The processor 120 may determine a slave device mounted on a slave vehicle with a minimum calculated average value of the distances as being the additional master device. In the embodiment illustrated in FIG. 8, the processor 120 may determine the second slave device 102 mounted on the second slave vehicle 12 among the plurality of slave vehicles 11, 12, 13, and 14 as being the additional master device.

The master device transmits data received from a base station to the plurality of slave devices 101, 102, 103, and 104) via D2D communication, and in the D2D communication that is not based on the base station, the shorter the communication distance, the better the communication speed and communication quality. By determining, based on information about a distance of each of the plurality of slave vehicles 11, 12, 13, and 14 to the other vehicles, a slave device (the second slave device 102 in the embodiment illustrated in FIG. 8) mounted on a slave vehicle (the second slave vehicle 12 in the embodiment illustrated in FIG. 8) with a shortest distance as being an additional master device, the electronic device 100 according to the embodiment illustrated in FIG. 8 may provide technical effects of maximizing communication efficiency and communication quality according to D2D communication.

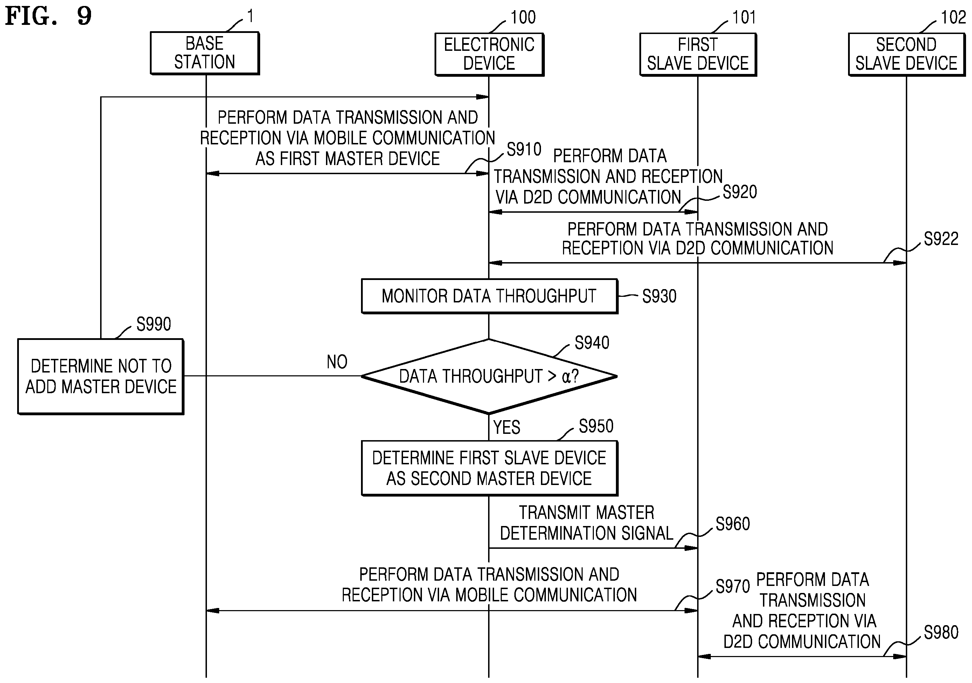

FIG. 9 is a flowchart illustrating operations of the electronic device 100, the first slave device 101, the second slave device, and the base station 1, according to an embodiment of the present disclosure.

In operation S910, the electronic device 100, as a first master device, performs data transmission and reception with the base station 1 by using a mobile communication method. In an embodiment of the present disclosure, the electronic device 100 may perform data communication with the base station 1 by using a 5G mmWave communication method. However, the electronic device 100 is not limited thereto, and may perform data communication with the base station 1 by using any one of, for example, 5G communication based on sub -6 band, LTE communication, and 3G communication.

The electronic device 100 may transmit, to the base station 1, a request for data required as a first master device and data required by a plurality of slave devices, and receive data from the base station 1 in response.

In operation S920, the electronic device 100 performs data transmission and reception with the first slave device 101 by using a D2D communication method. In operation S922, the electronic device 100 performs data transmission and reception with the second slave device 102 by using the D2D communication method. Although FIG. 9 illustrates that operation S922 is performed after operation S920 is performed, the order of operation S920 and operation S922 is not limited as shown.

In operation S930, the electronic device 100 monitors data throughput. In an embodiment of the present disclosure, the electronic device 100 may monitor data throughput including data transmitted to and received from the base station via the mobile communication module (111 of FIG. 2) and data transmitted to and received from the plurality of slave devices via the D2D communication module (112 of FIG. 2). The electronic device 100 may predict, based on a monitoring result, data throughput according to a preset time interval as well as current data throughput.

In operation S940, the electronic device 100 compares the data throughput with a preset threshold α. The 'preset threshold' refers to a threshold value of data throughput at which the electronic device 100 is capable of performing a communication relay function between the base station and each of the plurality of slave devices for efficiency of data usage and network access. For example, the preset threshold may be 5 Gbps or 10 Gbps, but is not limited thereto.

As a result of the comparison, when the data throughput exceeds the preset threshold α (operation S950), the electronic device 100 determines the first slave device 101 among the plurality of slave devices 101 and 102 as a second master device.

In operation S960, the electronic device 100 transmits a master device determination signal to the first slave device 101. The 'master device determination signal' is a signal indicating that it has been determined as the second master device. In an embodiment of the present disclosure, the electronic device 100 may transmit, via the D2D communication module (112 of FIG. 2), the master device determination signal to the first slave device 101 determined as the second master device.

In an embodiment of the present disclosure, the electronic device 100 may transmit, to the second master device, pieces of information necessary for the first slave device 101 determined as the second master device to perform data communication with the second slave device 102 by using a D2D communication method. The electronic device 100 may transmit, to the second master device, at least one piece of information among, for example, identification information of a plurality of slave devices IP address information thereof, and size information of previously received data among data required by the plurality of slave devices, which are necessary for a D2D communication connection.

In operation S970, the first slave device 101, as the second master device, transmits and receives data with the base station 1 by using a mobile communication method. In an embodiment of the present disclosure, the first slave device 101 may perform data communication with the base station 1 by using a 5G mmWave communication method. However, the present disclosure is not limited thereto, and the first slave device 101 may perform data communication with the base station 1 by using any one of, for example, 5G communication based on sub-6 band, LTE communication, and 3G communication.

In operation S980, the first slave device 101, as the second master device, transmits and receives data with the second slave device 102 by using a D2D communication method.

As a result of the comparison in operation S940, when the data throughput is less than the preset threshold α (operation S990), the electronic device 100 determines not to add a master device. In this case, the electronic device 100 is the only master device, and may perform data communication with the base station 1 and data communication with the first slave device 101 and the second slave device 102 via D2D communication.

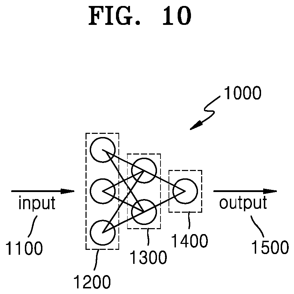

FIG. 10 is a diagram for describing operations performed by the electronic device 100 using Al technology, according to an embodiment of the present disclosure.

In detail, at least one of i) an operation of performing, as a first master device, data communication with a base station and performing data communication with a plurality of slave devices mounted on a plurality of vehicles by using a D2D communication method, ii) an operation of determining whether an additional master device is required based on data throughput from data communications with the base station and the plurality of slave devices, and iii) an operation of determining, based on a determination result, a second master device that is to perform data communication with the base station from among the plurality of slave devices, which are performed by the electronic device 100, may be performed using Al technology that enables computations to be performed via a neural network.

Al technology is a technology for obtaining a desired result by performing processing such as analysis and/or classification on input data based on computations via a neural network.

The Al technology may be implemented using algorithms. In this case, an algorithm or a set of algorithms for implementing the Al technology are referred to as a neural network. Here, the neural network may receive input data, perform computations for the analysis and/or the classification, and output the resultant data. In order to accurately output the resultant data corresponding to the input data, the neural network needs to be trained. In this case, 'training' may refer to training the neural network to discover or learn on its own a method of analyzing pieces of input data fed to the neural network, a method of classifying the pieces of input data, and/or a method of extracting features necessary for generating resultant data from the pieces of input data. In detail, through a training process, the neural network may optimize weight values therein by being trained using training data (e.g., a plurality of different images). Then, a desired result is output by processing input data via the neural network having the optimized weight values.

When the neural network includes a plurality of hidden layers which are internal layers for performing computations, i.e., when a depth of the neural network performing the computations increases, the neural network may be classified as a deep neural network (DNN). For example, the neural network includes a convolutional neural network (CNN), a recurrent neural network (RNN), a restricted Boltzmann machine (RBM), a deep belief network (DBN), a bidirectional recurrent DNN (BRDNN), a deep Q-network (DQN), etc., but is not limited to the above examples. Furthermore, the neural network may be subdivided. Furthermore, a CNN may be subdivided into a deep CNN (DCNN), a capsule neural network (Capsnet) (not shown), or the like.

An 'Al model' may be a neural network including at least one layer operating to receive input data and output a desired result. Furthermore, the 'Al model' may refer to an algorithm or a set of a plurality of algorithms for performing computations via a neural network and outputting a desired result, a processor for executing the algorithm (or set of algorithms), software for executing the algorithm (or set of algorithms), or hardware for executing the algorithm (or set of algorithms).

The at least one of i) the operation of performing, as the first master device, the data communication with the base station and performing the data communication with the plurality of slave devices mounted on the plurality of vehicles by using the D2D communication method, ii) the operation of determining whether an additional master device is required based on the data throughput from the data communications with the base station and the plurality of slave devices, and iii) the operation of determining, based on the determination result, the second master device that is to perform data communication with the base station from among the plurality of slave devices may be performed based on the Al model.

Referring to FIG. 10, a neural network 1000 may receive training data and be trained based on the training data. In addition, the trained neural network 1000 may take input data 1100 as an input to an input terminal 1200 and the input terminal 1200, a hidden layer 1300, and an output terminal 1400 may each perform computations for analyzing the input data 1100 and data from a previous layer and outputting output data 1500. Although FIG. 10 illustrates that the hidden layer 1300 is a single layer, this is merely an example, and the hidden layer 1300 may be composed of a plurality of layers.

In the disclosed embodiment, the neural network 1000 may be trained to monitor data throughput including data transmitted to and received from the base station and data transmitted to and received from the plurality of slave devices connected via D2D communication, compare the monitored data throughput with a preset threshold, and determine, based on a result of the comparison, whether an additional master device that is to perform data communication with the base station is required.

In the disclosed embodiment, the neural network 1000 may be trained to determine at least one second master device from among the plurality of slave devices.

In the disclosed embodiment, the neural network 1000 may be trained to respectively receive from the plurality of slave devices performance indicator values of signals related to the base station for each of the plurality of slave devices, and determine a second master device from among the plurality of slave devices based on the performance indicator values respectively received from the plurality of slave devices.

In the disclosed embodiment, the neural network 1000 may be trained to, for each of the plurality of vehicles, obtain information about distances to the other vehicles, calculate an average value of the obtained distances to the other vehicles, and determine a slave device mounted on a vehicle with a minimum average value of the distances calculated for each of the plurality of vehicles as being the second master device.

In the disclosed embodiment, the neural network 1300 may be trained to transmit, to the second master device, a master device determination signal indicating that it has been determined as the second master device.

In the disclosed embodiment, the neural network 1300 may be trained to transmit, to the second master device, at least one piece of information among identification information of the plurality of slave devices, IP address information thereof, and size information of previously received data among data required by the plurality of slave devices, which are necessary for a D2D communication connection with the plurality of slave devices.

In the disclosed embodiment, data or program code related to the neural network 1000 for performing the at least one of i) the operation of performing, as the first master device, the data communication with the base station and performing the data communication with the plurality of slave devices mounted on the plurality of vehicles by using the D2D communication method, ii) the operation of determining whether an additional master device is required based on the data throughput from the data communications with the base station and the plurality of slave devices, and iii) the operation of determining, based on the determination result, the second master device that is to perform data communication with the base station from among the plurality of slave devices may be stored in the memory (130 of FIG. 2), and training using the neural network 1000 may be performed by the processor (120 of FIG. 2). In this case, the processor 120 may include an Al processor.

Alternatively, the neural network 1000 for performing the at least one of i) the operation of performing, as the first master device, the data communication with the base station and performing the data communication with the plurality of slave devices mounted on the plurality of vehicles by using the D2D communication method, ii) the operation of determining whether an additional master device is required, based on the data throughput from the data communications with the base station and the plurality of slave devices, and iii) the operation of determining, based on the determination result, the second master device that is to perform data communication with the base station from among the plurality of slave devices may be implemented in a separate electronic device (not shown) or a processor (not shown) distinguished from the electronic device 100.

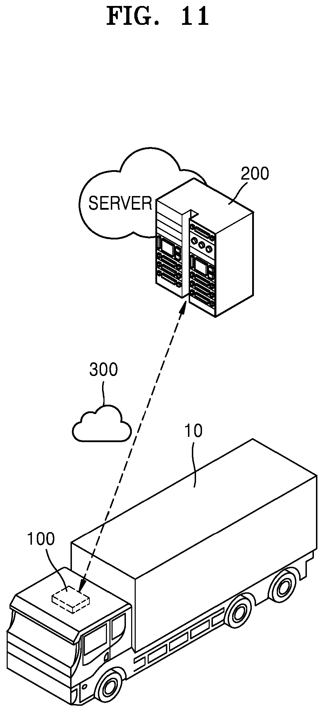

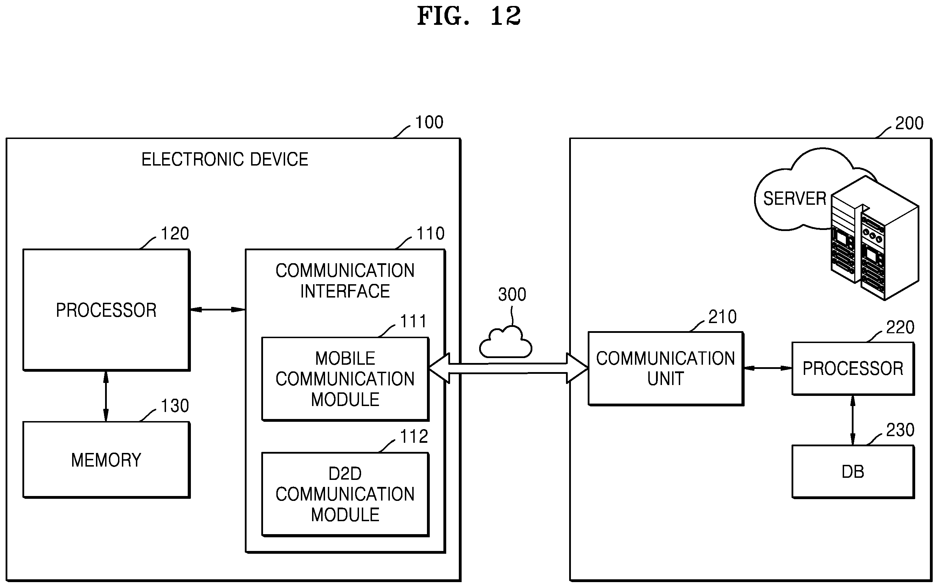

The computations via the neural network 1000 may also be performed by a server (200 of FIGS. 11 and 12) capable of communicating with the electronic device 100 via a wireless communication network, according to an embodiment. A communication between the electronic device 100 and the server 200 is described with reference to FIGS.11 and 12.

FIG. 11 is a diagram illustrating the electronic device 100 operating in conjunction with the server 200, according to a disclosed embodiment.

The server 200 may transmit and receive data with the electronic device 100 via a communication network 300 and process the data.

Referring to FIG. 12 together, the server 200 may include a communication unit 210 communicating with the electronic device 100, a processor 220 executing at least one instruction, and a database (DB) 230.

The server 200 may train an Al model and store the trained Al model. Furthermore, the server 200 may use the trained Al model to perform the at least one of i) the operation of performing, as the first master device, the data communication with the base station and performing the data communication with the plurality of slave devices mounted on the plurality of vehicles by using the D2D communication method, ii) the operation of determining whether an additional master device is required, based on the data throughput from the data communications with the base station and the plurality of slave devices, and iii) the operation of determining, based on the determination result, the second master device that is to perform data communication with the base station from among the plurality of slave devices.

In general, the electronic device 100 may have limited memory storage capacity, limited computation processing speed, limited training data set collection capability, etc., compared to the server 200. Thus, the server 200 may perform operations requiring storage of a large amount of data and a large number of computations, and then transmit necessary data and/or an Al model to the electronic device 100 via the communication network. Then, the electronic device 100 may receive and use the necessary data and/or the Al model via the server 200 to thereby quickly and easily perform necessary operations, without a large capacity memory and a processor with high-speed computation capability.

In the disclosed embodiment, the server 200 may include the neural network 1000 described with reference to FIG. 10.

FIG. 12 is a diagram for describing the electronic device 100 and the server 200 of FIG. 11 in detail.

Referring to FIG. 12, the server 200 may include the communication unit 210, the processor 220, and the DB 330.

The communication unit 210 communicates with an external device (not shown) via a wireless communication network. Here, the external device may include a server capable of performing at least one of computations required by the electronic device 100 or transmitting data required by the electronic device 100.

The communication unit 210 may include at least one communication module, such as a short-range communication module, a wired communication module, a mobile communication module, a broadcast receiving module, or the like. Here, the at least one communication module refers to a tuner for performing broadcast reception, and a communication module capable of performing data transmission and reception via a network that conforms to communication standards such as Bluetooth, wireless local area network (WLAN) (or Wi-Fi), wireless broadband (WiBro), World Interoperability for Microwave Access (WiMAX), code division multiple access (CDMA), wideband CDMA (WCDMA), the Internet, 3G, 4th generation (4G), 5G, and/or a communication method using mmWave.

The mobile communication module included in the communication unit 210 may perform communication with another device (e.g., the electronic device 100) located at a remote location via the communication network conforming to communication standards such as 3G, 4G (LTE), and/or 5G. In this case, a communication module that performs communication with the other device located at the remote location may be referred to as a 'long-range communication module'. In an embodiment of the present disclosure, the communication unit 210 of the server 200 may transmit and receive data to and from the mobile communication module 111 in the communication interface 110 of the electronic device 100 in a wired or wireless manner.

The processor 220 controls all operations of the server 200. For example, the processor 220 may perform required operations by executing at least one instruction and at least one of programs stored in the server 200.

The DB 230 may include a memory (not shown), and store, in the memory, at least one of at least one instruction, program, and data necessary for the server 200 to perform a designated operation. Furthermore, the DB 230 may store pieces of data necessary for the server 200 to perform computations via a neural network.

In the disclosed embodiment, the server 200 may store the neural network 1000 described with reference to FIG. 10. The neural network 1000 may be stored in at least one of the processor 220 and the DB 230. The neural network 1000 included in the server 200 may be a trained neural network.

Furthermore, the server 200 may transmit the trained neural network to the communication interface 110 of the electronic device 100 via the communication unit 210. The electronic device 100 may obtain and store the trained neural network, and obtain desired output data via the neural network.

The present disclosure provides an operation method of the electronic device 100 mounted on a master vehicle among a plurality of vehicles traveling in a platoon. According to an embodiment of the present disclosure, the operation method of the electronic device 100 may include performing, as a first master device, data communication with a base station, and performing data communication with a plurality of slave devices by using a D2D communication method (S310). According to an embodiment of the present disclosure, the operation method of the electronic device 100 may include determining whether an additional master device is required, based on data throughput from data communications with the base station and the plurality of slave devices (S320). According to an embodiment of the present disclosure, the operation method of the electronic device 100 may include determining, based on a result of the determining, a second master device, from among the plurality of slave devices, which is to perform data communication with the base station (S330).

In an embodiment of the present disclosure, the determining of whether the additional master device is required (S320) may include monitoring data throughput including data transmitted to and received from the base station and data transmitted to and received from the plurality of slave devices connected via D2D communication (S410), comparing the monitored data throughput with a preset threshold (S420), and determining, based on a result of the comparing, whether the additional master device that is to perform data communication with the base station is required.

In an embodiment of the present disclosure, in the determining of the second master device (S330), the electronic device 100 may determine at least one second master device from among the plurality of slave devices.

In an embodiment of the present disclosure, the second master device may perform data communication with a base station. The plurality of slave devices may perform data communication with the first master device or the second master device by using the D2D communication method.

In an embodiment of the present disclosure, the operation method may further include respectively receiving from the plurality of slave devices performance indicator values of signals related to the base station for the plurality of slave devices. In the determining of the second master device, the electronic device 100 may determine the second master device from among the plurality of slave devices based on the performance indicator values respectively received from the plurality of slave devices.

In an embodiment of the present disclosure, each of the performance indicator values may include at least one of RSRP, RSSI, RSRQ and SINR for each of the plurality of slave devices.

In an embodiment of the present disclosure, the operation method may further include obtaining, for each of the plurality of vehicles, information about distances to the other vehicles, and calculating an average value of the distances to the other vehicles for each of the plurality of vehicles. In the determining of the second master device, the electronic device 100 may determine a slave device, which is mounted on a vehicle with a minimum average values of the distances calculated for each of the plurality of vehicles, as being the second master device.

In an embodiment of the present disclosure, the operation method may further include transmitting, to the second master device, a master device determination signal indicating that it has been determined as the second master device.

In an embodiment of the present disclosure, the operation method may further include transmitting, to the second master device, at least one piece of information among identification information of the plurality of slave devices, IP address information thereof, and size information of previously received data among data required by the plurality of slave devices, which are necessary for a D2D communication connection with the plurality of slave devices.

The present disclosure provides the electronic device 100 that is mounted on a master vehicle among a plurality of vehicles travelling in a platoon and operates as a first master device. According to an embodiment of the present disclosure, the electronic device 100 may include the communication interface 110 configured to perform data transmission and reception with a base station and perform, via D2D communication, data communication with a plurality of slave devices respectively mounted on the plurality of vehicles, the memory 130 storing one or more instructions related to a function or operation of the electronic device 100, and at least one processor 120 configured to execute the one or more instructions stored in the memory 130. The at least one processor 120, individually or collectively, may be configured to cause the electronic device (100) to: monitor, via the communication interface 110, data throughput from data communications with the base station and the plurality of slave devices. The at least one processor 120, individually or collectively, may be configured to cause the electronic device (100) to: determine, based on the monitored data throughput, whether an additional master device is required. The at least one processor 120, individually or collectively, may be configured to cause the electronic device (100) to: determine, based on a result of the determining, a second master device, from among the plurality of slave devices, which is to perform data communication with the base station.

In an embodiment of the present disclosure, the communication interface 110 may include the mobile communication module 111 configured to perform data communication with the base station and the D2D communication module configured to perform data communication with the plurality of slave devices by using a D2D communication method. The at least one processor 120, individually or collectively, may be configured to cause the electronic device (100) to: monitor data throughput including data transmitted to and received from the base station via the mobile communication module 111 and data transmitted to and received from the plurality of slave devices via the D2D communication module 112. The at least one processor 120, individually or collectively, may be configured to cause the electronic device (100) to: compare the monitored data throughput with a preset threshold, and determine, based on a result of the comparing, whether the additional master device that is to perform data communication with the base station is required.

In an embodiment of the present disclosure, the at least one processor 120, individually or collectively, may be configured to cause the electronic device (100) to: determine at least one second master device from among the plurality of slave devices.

In an embodiment of the present disclosure, the second master device may perform data communication with a base station, and the plurality of slave devices may perform data communication with the first master device or the second master device by using the D2D communication method.

In an embodiment of the present disclosure, the at least one processor 120, individually or collectively, may be configured to cause the electronic device (100) to: respectively receive, via the communication interface 110, from the plurality of slave devices, performance indicator values of signals related to the base station for the plurality of slave devices. The at least one processor 120, individually or collectively, may be configured to cause the electronic device (100) to: determine the second master device from among the plurality of slave devices based on the performance indicator values respectively received from the plurality of slave devices.

In an embodiment of the present disclosure, each of the performance indicator values may include at least one of RSRP, RSSI, RSRQ and SINR for each of the plurality of slave devices.

In an embodiment of the present disclosure, the at least one processor 120, individually or collectively, may be configured to cause the electronic device (100) to: obtain, via the communication interface 110, information about distances of each of the plurality of vehicles to the other vehicles, and calculate an average value of the distances of each of the plurality of vehicles to the other vehicles. The at least one processor 120, individually or collectively, may be configured to cause the electronic device (100) to: determine a slave device, which is mounted on a vehicle with a minimum average value of the distances calculated for each of the plurality of vehicles, as being the second master device.

In an embodiment of the present disclosure, the at least one processor 120, individually or collectively, may be configured to cause the electronic device (100) to: control the communication interface 110 to transmit, to the second master device, a master device determination signal indicating that it has been determined as the second master device.

In an embodiment of the present disclosure, the at least one processor 120, individually or collectively, may be configured to cause the electronic device (100) to: control the communication interface 110 to transmit, to the second master device, at least one piece of information among identification information of the plurality of slave devices, IP address information thereof, and size information of previously received data among data required by the plurality of slave devices, which are necessary for a D2D communication connection with the plurality of slave devices.

In an embodiment of the present disclosure, at least one of the first master device and the second master device may perform data communication with the base station by using a 5G mmWave communication method.

To solve the technical problems described above, according to another aspect of the present disclosure, there is provided a computer program product including a computer-readable storage medium having recorded thereon a program for execution on a computer. The storage medium may include instructions that are readable by the electronic device 100, which is mounted on a master vehicle among a plurality of vehicles travelling in a platoon, to: perform, as a first master device, data communication with a base station and perform, through a D2D communication method, data communication with a plurality of slave devices on the plurality of vehicles traveling in the platoon; determine whether an additional master device is required, based on data throughput from data communications with the base station and the plurality of slave devices; and determine, based on a result of the determining, a second master device, from among the plurality of slave devices, which is to perform data communication with the base station.

A program executed by the electronic device 100 described in this specification may be implemented as a hardware component, a software component, and/or a combination of the hardware component and the software component. The program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, floppy disks, hard disks, etc.), optical recording media (e.g., compact disc (CD)-ROM, a digital versatile disc (DVD), etc.), etc. The computer-readable recording media may be distributed over computer systems connected through a network so that computer-readable code may be stored and executed in a distributed manner. The media may be readable by a computer, stored in a memory, and executed by a processor.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments disclosed in the present specification may be included in a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of the electronic device or through an electronic market (e.g., Samsung Galaxy Store^{™} and Google Play Store^{™}). For such electronic distribution, at least a part of the software program may be stored in the storage medium or may be temporarily generated. In this case, the storage medium may be a storage medium of a server of a manufacturer of a vehicle or the electronic device 100, a server of the electronic market, or a relay server for temporarily storing the software program.

In a system consisting of the electronic device 100, the server (200 of FIG. 11 and 12), and another electronic device, the computer program product may include a storage medium of the server 200 or a storage medium of the other electronic device. Alternatively, in a case where there is a third device (e.g., a smartphone) communicatively connected to the electronic device 100, the computer program product may include a storage medium of the third device. Alternatively, the computer program product may include a software program itself that is transmitted from the electronic device 100 to the other electronic device or the third device or that is transmitted from the third device to the electronic device 100.

In this case, one of the electronic device 100, the other electronic device, and the third device may execute the computer program product to perform methods according to the disclosed embodiments. Alternatively, two or more of the electronic device 100, the other electronic device, and the third device may execute the computer program product to perform the methods according to the disclosed embodiments in a distributed manner.

For example, the electronic device 100 may execute the computer program product stored in the memory (130 of FIG. 2) to control the other electronic device communicatively connected to the electronic device 100 to perform the methods according to the disclosed embodiments.

In another example, the third device may execute the computer program product to control the electronic device communicatively connected to the third device to perform the methods according to the disclosed embodiments.

In a case where the third device executes the computer program product, the third device may download the computer program product from the electronic device 100 and execute the downloaded computer program product. Alternatively, the third device may execute the computer program product that is pre-loaded therein to perform the methods according to the disclosed embodiments.

While the embodiments have been described above with reference to limited examples and figures, it will be understood by those of ordinary skill in the art that various modifications and changes in form and details may be made from the above descriptions.

## Claims

1. An operation method of an electronic device (100) mounted on a master vehicle (10) among a plurality of vehicles (10, 11, 12, 13, 14) travelling in a platoon, the operation method comprising:
performing, as a first master device, data communication with a first base station (1) and performing data communication with a plurality of slave devices (101, 102, 103, 104) by using a device-to-device, D2D, communication method;
determining whether an additional master device is required, based on data throughput from data communications with the first base station (1) and the plurality of slave devices (101, 102, 103, 104), wherein the data throughput indicates an amount of data transmitted to and received from the base station (1) and an amount of data transmitted to and received from the plurality of slave devices (101, 102, 103, 104) connected via D2D communication; and
determining, based on a result of the determining, a second master device (104), from among the plurality of slave devices (101, 102, 103, 104), which is to perform data communication with the first base station (1) or a second base station (2),
wherein the second master device (104) is determined based on information about distances of each of the plurality of vehicles (10, 11, 12, 13, 14) to the other vehicles traveling in the platoon, and
wherein remaining slave devices (101, 102, 103) are connected to either the first master device or the second master device (104), based on a distance between each of the remaining slave devices (101, 102, 103) and the first master device and a distance between each of the remaining slave devices (101, 102, 103) and the second master device (104).

2. The operation method of claim 1, wherein
the determining of whether the additional master device is required comprises:
comparing the data throughput with a preset threshold; and
determining, based on a result of the comparing, whether the additional master device that is to perform data communication with the first base station (1) or the second base station (2) is required.

3. The operation method of claim 1, the determining of the second master device comprises determining at least one second master device from among the plurality of slave devices (101, 102, 103, 104).

4. The operation method of claim 1, further comprising
respectively receiving from the plurality of slave devices (101, 102, 103, 104) performance indicator values of signals related to the first base station (1) for the plurality of slave devices (101, 102, 103, 104),
wherein the determining of the second master device comprises determining the second master device from among the plurality of slave devices (101, 102, 103, 104) based on the performance indicator values respectively received from the plurality of slave devices (101, 102, 103, 104).

5. The operation method of claim 1, wherein determining the second master device (104) further comprising:
obtaining, for each of the plurality of vehicles (10, 11, 12, 13, 14), the information about distances to the other vehicles; and
calculating an average value of the distances to the other vehicles for each of the plurality of vehicles (10, 11, 12, 13, 14),
wherein the determining of the second master device comprises determining a slave device, which is mounted on a vehicle with a minimum average value of the distances calculated for each of the plurality of vehicles (10, 11, 12, 13, 14), as being the second master device.

6. The operation method of claim 1, further comprising transmitting, to the second master device, a master device determination signal indicating that it has been determined as the second master device.

7. The operation method of claim 1, further comprising transmitting, to the second master device, at least one piece of information among identification information of the plurality of slave devices (101, 102, 103, 104), Internet Protocol, IP, address information thereof, and size information of previously received data among data required by the plurality of slave devices (101, 102, 103, 104), which are necessary for a D2D communication connection with the plurality of slave devices (101, 102, 103, 104).

8. An electronic device (100) that is mounted on a master vehicle (10) among a plurality of vehicles (10, 11, 12, 13, 14) travelling in a platoon and operates as a first master device, the electronic device (100) comprising:
a communication interface (110) configured to perform data transmission and reception with a first base station (1) and perform, via device-to-device, D2D, communication, data communication with a plurality of slave devices (101, 102, 103, 104) respectively mounted on the plurality of vehicles (10, 11, 12, 13, 14);
a memory (130) storing one or more instructions related to a function or an operation of the electronic device (100); and
at least one processor (120), individually or collectively, configured to execute the one or more instructions stored in the memory (130) to cause the electronic device (100) to:
monitor, via the communication interface (110), data throughput from data communications with the first base station (1) and the plurality of slave devices (101, 102, 103, 104), wherein the data throughput indicates an amount of data transmitted to and received from the base station (1) and an amount of data transmitted to and received from the plurality of slave devices (101, 102, 103, 104) connected via D2D communication,
determine, based on the monitored data throughput, whether an additional master device is required, and
determine, based on a result of the determining, a second master device (104), from among the plurality of slave devices (101, 102, 103, 104), which is to perform data communication with the first base station (1) or a second base station (2),
wherein the second master device (104) is determined based on information about distances of each of the plurality of vehicles (10, 11, 12, 13, 14) to the other vehicles traveling in the platoon, and
wherein remaining slave devices (101, 102, 103) are connected to either the first master device or the second master device (104), based on a distance between each of the remaining slave devices (101, 102, 103) and the first master device and a distance between each of the remaining slave devices (101, 102, 103) and the second master device (104).

9. The electronic device (100) of claim 8, wherein
the communication interface (110) comprises a mobile communication module (111) configured to perform data communication with the first base station (1) and a D2D communication module (112) configured to perform data communication with the plurality of slave devices (101, 102, 103, 104) by using a D2D communication method, and
the at least one processor (120), individually or collectively, is further configured to execute the one or more instructions stored in the memory (130) to cause the electronic device (100) to:
compare the data throughput with a preset threshold, and
determine, based on a result of the comparing, whether the additional master device that is to perform data communication with the first base station (1) or the second base station (2) is required.

10. The electronic device (100) of claim 8, wherein the at least one processor (120) is further configured to determine at least one second master device from among the plurality of slave devices (101, 102, 103, 104).

11. The electronic device (100) of claim 8, wherein
the at least one processor (120), individually or collectively, is further configured to execute the one or more instructions stored in the memory (130) to cause the electronic device (100) to:
respectively receive, via the communication interface (110), from the plurality of slave devices (101, 102, 103, 104), performance indicator values of signals related to the first base station (1) for the plurality of slave devices (101, 102, 103, 104), and
determine the second master device from among the plurality of slave devices (101, 102, 103, 104) based on the performance indicator values respectively received from the plurality of slave devices (101, 102, 103, 104).

12. The electronic device (100) of claim 8, wherein
the at least one processor (120), individually or collectively, is further configured to execute the one or more instructions stored in the memory (130) to cause the electronic device (100) to:
obtain, via the communication interface (110), the information about distances of each of the plurality of vehicles (10, 11, 12, 13, 14) to the other vehicles,
calculate an average value of the distances of each of the plurality of vehicles (10, 11, 12, 13, 14) to the other vehicles, and
determine a slave device, which is mounted on a vehicle with a minimum average value of the distances calculated for each of the plurality of vehicles (10, 11, 12, 13, 14), as being the second master device.

13. The electronic device (100) of claim 8, wherein the at least one processor (120), individually or collectively, is further configured to execute the one or more instructions stored in the memory (130) to cause the electronic device (100) to:
control the communication interface (110) to transmit, to the second master device, a master device determination signal indicating that it has been determined as the second master device.

14. The electronic device (100) of claim 8, wherein the at least one processor (120), individually or collectively, is further configured to execute the one or more instructions stored in the memory (130) to cause the electronic device (100) to:
control the communication interface (110) to transmit, to the second master device, at least one piece of information among identification information of the plurality of slave devices (101, 102, 103, 104), Internet Protocol (IP) address information thereof, and size information of previously received data among data required by the plurality of slave devices (101, 102, 103, 104), which are necessary for a D2D communication connection with the plurality of slave devices (101, 102, 103, 104).

15. A computer program product including a computer-readable storage medium, wherein the storage medium comprises instructions that are executed by an electronic device (100), which is mounted on a master vehicle (10) among a plurality of vehicles (10, 11, 12, 13, 14) travelling in a platoon, to perform the method according to any one of claims 1 to 7.

## Patentansprüche

1. Verfahren zum Betrieb einer elektronischen Vorrichtung (100), die auf einem Master-Fahrzeug (10) unter einer Vielzahl von in einer Kolonne fahrenden Fahrzeugen (10, 11, 12, 13, 14) montiert ist, wobei das Betriebsverfahren Folgendes umfasst:
Durchführen einer Datenkommunikation als erste Master-Vorrichtung mit einer ersten Basisstation (1) und Durchführen einer Datenkommunikation mit einer Vielzahl von Slave-Vorrichtungen (101, 102, 103, 104) unter Verwendung eines Vorrichtung-zu-Vorrichtung-, D2D, -Kommunikationsverfahrens;
Feststellen basierend auf dem Datendurchsatz aus den Datenkommunikationen mit der ersten Basisstation (1) und der Vielzahl von Slave-Vorrichtungen (101, 102, 103, 104), ob eine zusätzliche Master-Vorrichtung erforderlich ist, wobei der Datendurchsatz eine Datenmenge, die an die Basisstation (1) gesendet und von dieser empfangen wird, und eine Datenmenge angibt, die an die Vielzahl von über D2D-Kommunikation verbundenen Slave-Vorrichtungen (101, 102, 103, 104) gesendet und von dieser empfangen wird; und
Bestimmen einer zweiten Master-Vorrichtung (104) aus der Vielzahl von Slave-Vorrichtungen (101, 102, 103, 104) basierend auf einem Ergebnis der Feststellung, die die Datenkommunikation mit der ersten Basisstation (1) oder einer zweiten Basisstation (2) durchführen soll,
wobei die zweite Master-Vorrichtung (104) auf der Grundlage von Informationen über die Abstände jedes der mehreren Fahrzeuge (10, 11, 12, 13, 14) zu den anderen in der Kolonne fahrenden Fahrzeugen bestimmt wird, und
wobei die verbleibenden Slave-Vorrichtungen (101, 102, 103) entweder mit der ersten Master-Vorrichtung oder der zweiten Master-Vorrichtung (104) verbunden werden, basierend auf einem Abstand zwischen jeder der verbleibenden Slave-Vorrichtungen (101, 102, 103) und der ersten Master-Vorrichtung sowie einem Abstand zwischen jeder der verbleibenden Slave-Vorrichtungen (101, 102, 103) und der zweiten Master-Vorrichtung (104).

2. Betriebsverfahren nach Anspruch 1, wobei
das Feststellen, ob die zusätzliche Master-Vorrichtung erforderlich ist, Folgendes umfasst: Vergleichen des Datendurchsatzes mit einem voreingestellten Schwellenwert; und
Feststellen basierend auf einem Ergebnis des Vergleichs, ob die zusätzliche Master-Vorrichtung, die die Datenkommunikation mit der ersten Basisstation (1) oder der zweiten Basisstation (2) durchführen soll, erforderlich ist.

3. Betriebsverfahren nach Anspruch 1, wobei das Bestimmen der zweiten Master-Vorrichtung das Bestimmen mindestens einer zweiten Master-Vorrichtung aus der Vielzahl von Slave-Vorrichtungen (101, 102, 103, 104) umfasst.

4. Betriebsverfahren nach Anspruch 1, umfassend ferner:
jeweiliges Empfangen von Leistungsindikatorwerten von Signalen, die sich auf die erste Basisstation (1) beziehen, von der Vielzahl von Slave-Vorrichtungen (101, 102, 103, 104) für die Vielzahl von Slave-Vorrichtungen (101, 102, 103, 104),
wobei das Bestimmen der zweiten Master-Vorrichtung das Bestimmen der zweiten Master-Vorrichtung aus der Vielzahl von Slave-Vorrichtungen (101, 102, 103, 104) auf der Grundlage der jeweils von der Vielzahl von Slave-Vorrichtungen (101, 102, 103, 104) empfangenen Leistungsindikatorwerte umfasst.

5. Betriebsverfahren nach Anspruch 1, wobei das Bestimmen der zweiten Master-Vorrichtung (104) ferner Folgendes umfasst:
Erhalten der Informationen über Abstände zu den anderen Fahrzeugen für jedes der mehreren Fahrzeuge (10, 11, 12, 13, 14); und
Berechnen eines Durchschnittswerts der Abstände zu den anderen Fahrzeugen für jedes der mehreren Fahrzeuge (10, 11, 12, 13, 14),
wobei das Bestimmen der zweiten Master-Vorrichtung das Bestimmen einer Slave-Vorrichtung, die an einem Fahrzeug mit einem minimalen Durchschnittswert der für jedes der mehreren Fahrzeuge (10, 11, 12, 13, 14) berechneten Abstände montiert ist, als die zweite Master-Vorrichtung umfasst.

6. Betriebsverfahren nach Anspruch 1, umfassend ferner das Senden eines Master-Vorrichtung-Bestimmungssignals an die zweite Master-Vorrichtung, das angibt, dass sie als die zweite Master-Vorrichtung bestimmt wurde.

7. Betriebsverfahren nach Anspruch 1, umfassend ferner das Senden mindestens einer der folgenden Informationen an die zweite Master-Vorrichtung: Identifikationsinformationen der mehreren Slave-Vorrichtungen (101, 102, 103, 104), Internetprotokoll-, IP, - Adressinformationen davon und Größeninformationen zuvor empfangener Daten unter den von den mehreren Slave-Vorrichtungen (101, 102, 103, 104) benötigten Daten, die für eine D2D-Kommunikationsverbindung mit den mehreren Slave-Vorrichtungen (101, 102, 103, 104) erforderlich sind.

8. Elektronische Vorrichtung (100), die auf einem Master-Fahrzeug (10) unter einer Vielzahl von in einer Kolonne fahrenden Fahrzeugen (10, 11, 12, 13, 14) montiert ist und als eine erste Master-Vorrichtung betrieben wird, wobei die elektronische Vorrichtung (100) Folgendes umfasst:
eine Kommunikationsschnittstelle (110), die dazu konfiguriert ist, Datenübertragung und -empfang mit einer ersten Basisstation (1) durchzuführen und über eine Vorrichtung-zu-Vorrichtung-, D2D, -Kommunikation Datenkommunikation mit einer Vielzahl von Slave-Vorrichtungen (101, 102, 103, 104) durchzuführen, die jeweils auf den mehreren Fahrzeugen (10, 11, 12, 13, 14) montiert sind;
einen Speicher (130), in dem ein oder mehrere Befehle gespeichert sind, die sich auf eine Funktion oder einen Betrieb der elektronischen Vorrichtung (100) beziehen; und
mindestens einen Prozessor (120), der einzeln oder gemeinsam dazu konfiguriert ist, den einen oder die mehreren im Speicher (130) gespeicherten Befehle auszuführen, um die elektronische Vorrichtung (100) dazu zu veranlassen:
über die Kommunikationsschnittstelle (110) den Datendurchsatz aus den Datenkommunikationen mit der ersten Basisstation (1) und den mehreren Slave-Vorrichtungen (101, 102, 103, 104) zu überwachen, wobei der Datendurchsatz eine Datenmenge, die an die Basisstation (1) gesendet und von dieser empfangen wird, und eine Datenmenge angibt, die an die Vielzahl von über D2D-Kommunikation verbundenen Slave-Vorrichtungen (101, 102, 103, 104) gesendet und von dieser empfangen wird,
auf der Grundlage des überwachten Datendurchsatzes festzustellen, ob eine zusätzliche Master-Vorrichtung erforderlich ist, und
auf der Grundlage eines Ergebnisses der Feststellung eine zweite Master-Vorrichtung (104) aus der Vielzahl von Slave-Vorrichtungen (101, 102, 103, 104) zu bestimmen, die die Datenkommunikation mit der ersten Basisstation (1) oder einer zweiten Basisstation (2) durchführen soll,
wobei die zweite Master-Vorrichtung (104) auf der Grundlage von Informationen über die Abstände jedes der mehreren Fahrzeuge (10, 11, 12, 13, 14) zu den anderen in der Kolonne fahrenden Fahrzeugen bestimmt wird, und
wobei die verbleibenden Slave-Vorrichtungen (101, 102, 103) entweder mit der ersten Master-Vorrichtung oder der zweiten Master-Vorrichtung (104) verbunden werden, basierend auf einem Abstand zwischen jeder der verbleibenden Slave-Vorrichtungen (101, 102, 103) und der ersten Master-Vorrichtung sowie einem Abstand zwischen jeder der verbleibenden Slave-Vorrichtungen (101, 102, 103) und der zweiten Master-Vorrichtung (104).

9. Elektronische Vorrichtung (100) nach Anspruch 8, wobei
die Kommunikationsschnittstelle (110) ein Mobilkommunikationsmodul (111), das zur Durchführung einer Datenkommunikation mit der ersten Basisstation (1) konfiguriert ist, und ein D2D-Kommunikationsmodul (112) umfasst, das zur Durchführung einer Datenkommunikation mit der Vielzahl von Slave-Vorrichtungen (101, 102, 103, 104) unter Verwendung eines D2D-Kommunikationsverfahrens konfiguriert ist, und
der mindestens eine Prozessor (120) einzeln oder gemeinsam ferner dazu konfiguriert ist, den einen oder die mehreren im Speicher (130) gespeicherten Befehle auszuführen, um die elektronische Vorrichtung (100) dazu zu veranlassen:
den Datendurchsatz mit einem voreingestellten Schwellenwert zu vergleichen und
auf der Grundlage eines Ergebnisses des Vergleichs festzustellen, ob die zusätzliche Master-Vorrichtung, die die Datenkommunikation mit der ersten Basisstation (1) oder der zweiten Basisstation (2) durchführen soll, erforderlich ist.

10. Elektronische Vorrichtung (100) nach Anspruch 8, wobei der mindestens eine Prozessor (120) ferner dazu konfiguriert ist, mindestens eine zweite Master-Vorrichtung aus der Vielzahl von Slave-Vorrichtungen (101, 102, 103, 104) zu bestimmen.

11. Elektronische Vorrichtung (100) nach Anspruch 8, wobei
der mindestens eine Prozessor (120) einzeln oder gemeinsam ferner dazu konfiguriert ist, den einen oder die mehreren im Speicher (130) gespeicherten Befehle auszuführen, um die elektronische Vorrichtung (100) dazu zu veranlassen:
über die Kommunikationsschnittstelle (110) jeweils von der Vielzahl von Slave-Vorrichtungen (101, 102, 103, 104) Leistungsindikatorwerte von Signalen, die sich auf die erste Basisstation (1) beziehen, für die Vielzahl von Slave-Vorrichtungen (101, 102, 103, 104) zu empfangen, und
die zweite Master-Vorrichtung aus der Vielzahl von Slave-Vorrichtungen (101, 102, 103, 104) auf der Grundlage der jeweils von der Vielzahl von Slave-Vorrichtungen (101, 102, 103, 104) empfangenen Leistungsindikatorwerte zu bestimmen.

12. Elektronische Vorrichtung (100) nach Anspruch 8, wobei
der mindestens eine Prozessor (120) einzeln oder gemeinsam ferner dazu konfiguriert ist, den einen oder die mehreren im Speicher (130) gespeicherten Befehle auszuführen, um die elektronische Vorrichtung (100) dazu zu veranlassen:
über die Kommunikationsschnittstelle (110) die Informationen über die Abstände jedes der mehreren Fahrzeuge (10, 11, 12, 13, 14) zu den anderen Fahrzeugen zu erhalten,
einen Durchschnittswert der Abstände jedes der mehreren Fahrzeuge (10, 11, 12, 13, 14) zu den anderen Fahrzeugen zu berechnen und
eine Slave-Vorrichtung, die auf einem Fahrzeug mit einem minimalen Durchschnittswert der für jedes der mehreren Fahrzeuge (10, 11, 12, 13, 14) berechneten Abstände montiert ist, als die zweite Master-Vorrichtung zu bestimmen.

13. Elektronische Vorrichtung (100) nach Anspruch 8, wobei der mindestens eine Prozessor (120) einzeln oder gemeinsam ferner dazu konfiguriert ist, den einen oder die mehreren im Speicher (130) gespeicherten Befehle auszuführen, um die elektronische Vorrichtung (100) dazu zu veranlassen:
die Kommunikationsschnittstelle (110) zu steuern, um ein Master-Vorrichtung-Bestimmungssignal an die zweite Master-Vorrichtung zu senden, das angibt, dass sie als die zweite Master-Vorrichtung bestimmt wurde.

14. Elektronische Vorrichtung (100) nach Anspruch 8, wobei der mindestens eine Prozessor (120) einzeln oder gemeinsam ferner dazu konfiguriert ist, den einen oder die mehreren im Speicher (130) gespeicherten Befehle auszuführen, um die elektronische Vorrichtung (100) dazu zu veranlassen:
die Kommunikationsschnittstelle (110) zu steuern, um mindestens eine der folgenden Informationen an die zweite Master-Vorrichtung zu senden: Identifikationsinformationen der mehreren Slave-Vorrichtungen (101, 102, 103, 104), Internetprotokoll-, IP, - Adressinformationen davon und Größeninformationen zuvor empfangener Daten unter den von der Vielzahl von Slave-Vorrichtungen (101, 102, 103, 104) benötigten Daten, die für eine D2D-Kommunikationsverbindung mit der Vielzahl von Slave-Vorrichtungen (101, 102, 103, 104) erforderlich sind.

15. Computerprogrammprodukt, umfassend ein computerlesbares Speichermedium, wobei das Speichermedium Befehle enthält, die von einer elektronischen Vorrichtung (100), die auf einem Master-Fahrzeug (10) unter einer Vielzahl von in einer Kolonne fahrenden Fahrzeugen (10, 11, 12, 13, 14) montiert ist, ausgeführt werden, um das Verfahren nach einem der Ansprüche 1 bis 7 durchzuführen.

## Revendications

1. Procédé de fonctionnement d'un dispositif électronique (100) monté sur un véhicule maître (10) parmi une pluralité de véhicules (10, 11, 12, 13, 14) circulant en peloton, le procédé de fonctionnement comprenant :
effectuer, comme premier dispositif maître, une communication de données avec une première station de base (1) et effectuer une communication de données avec une pluralité de dispositifs esclaves (101, 102, 103, 104) en utilisant un procédé de communication dispositif-à-dispositif, D2D ;
déterminer si un dispositif maître supplémentaire est nécessaire, sur la base d'un débit de données provenant des communications de données avec la première station de base (1) et la pluralité de dispositifs esclaves (101, 102, 103, 104), le débit de données indiquant une quantité de données transmises vers et reçues depuis la station de base (1) et une quantité de données transmises vers et reçues depuis la pluralité de dispositifs esclaves (101, 102, 103, 104) connectés via la communication D2D ; et
déterminer, sur la base d'un résultat de la détermination, un deuxième dispositif maître (104), parmi la pluralité de dispositifs esclaves (101, 102, 103, 104), qui doit effectuer la communication de données avec la première station de base (1) ou une deuxième station de base (2),
dans lequel le deuxième dispositif maître (104) est déterminé sur la base d'informations sur des distances de chacun de la pluralité de véhicules (10, 11, 12, 13, 14) par rapport aux autres véhicules circulant en peloton, et
dans lequel des dispositifs esclaves (101, 102, 103) restants sont connectés soit au premier dispositif maître, soit au deuxième dispositif maître (104), sur la base d'une distance entre chacun des dispositifs esclaves (101, 102, 103) restants et le premier dispositif maître et d'une distance entre chacun des dispositifs esclaves (101, 102, 103) restants et le deuxième dispositif maître (104).

2. Procédé de fonctionnement selon la revendication 1, dans lequel
la détermination si le dispositif maître supplémentaire est nécessaire consiste à :
comparer le débit de données avec un seuil prédéfini ; et
déterminer, sur la base d'un résultat de la comparaison, si le dispositif maître supplémentaire qui doit effectuer la communication de données avec la première station de base (1) ou la deuxième station de base (2) est nécessaire.

3. Procédé de fonctionnement selon la revendication 1, dans lequel la détermination du deuxième dispositif maître consiste à déterminer au moins un deuxième dispositif maître parmi la pluralité de dispositifs esclaves (101, 102, 103, 104).

4. Procédé de fonctionnement selon la revendication 1, comprenant en outre
recevoir respectivement depuis la pluralité de dispositifs esclaves (101, 102, 103, 104) des valeurs d'indicateur de performance des signaux liés à la première station de base (1) pour la pluralité de dispositifs esclaves (101, 102, 103, 104),
dans lequel la détermination du deuxième dispositif maître consiste à déterminer le deuxième dispositif maître parmi la pluralité de dispositifs esclaves (101, 102, 103, 104) sur la base des valeurs d'indicateur de performance respectivement reçues depuis la pluralité de dispositifs esclaves (101, 102, 103, 104).

5. Procédé de fonctionnement selon la revendication 1, dans lequel la détermination du deuxième dispositif maître (104) consiste à en outre :
obtenir, pour chacun de la pluralité de véhicules (10, 11, 12, 13, 14), les informations sur des distances par rapport aux autres véhicules ; et
calculer une valeur moyenne des distances par rapport aux autres véhicules pour chacun de la pluralité de véhicules (10, 11, 12, 13, 14),
dans lequel la détermination du deuxième dispositif maître consiste à déterminer un dispositif esclave qui est monté sur un véhicule présentant une valeur moyenne minimale des distances calculées pour chacun de la pluralité de véhicules (10, 11, 12, 13, 14), comme le deuxième dispositif maître.

6. Procédé de fonctionnement selon la revendication 1, comprenant en outre : transmettre, vers le deuxième dispositif maître, un signal de détermination de dispositif maître indiquant qu'il a été déterminé comme le deuxième dispositif maître.

7. Procédé de fonctionnement selon la revendication 1, comprenant en outre : transmettre, vers le deuxième dispositif maître, au moins une information parmi des informations d'identification de la pluralité d'informations d'adresse de Protocole Internet, IP, de dispositifs esclaves (101, 102, 103, 104) de celui-ci, et des informations de taille des données précédemment reçues parmi des données requises par la pluralité de dispositifs esclaves (101, 102, 103, 104), qui sont nécessaires pour une connexion de communication D2D avec la pluralité de dispositifs esclaves (101, 102, 103, 104).

8. Dispositif électronique (100) qui est monté sur un véhicule maître (10) parmi une pluralité de véhicules (10, 11, 12, 13, 14) circulant en peloton et fonctionne comme premier dispositif maître, le dispositif électronique (100) comprenant :
une interface de communication (110) configurée pour effectuer une transmission et une réception de données avec une première station de base (1) et effectuer, via une communication de dispositif à dispositif, D2D, une communication de données avec une pluralité de dispositifs esclaves (101, 102, 103, 104) respectivement montés sur la pluralité de véhicules (10, 11, 12, 13, 14) ;
une mémoire (130) stockant une ou plusieurs instructions relatives à une fonction ou à un fonctionnement du dispositif électronique (100) ; et
au moins un processeur (120), individuellement ou collectivement, configuré pour exécuter l'une ou plusieurs instructions stockées dans la mémoire (130) afin d'amener le dispositif électronique (100) à :
surveiller, via l'interface de communication (110), un débit de données provenant des communications de données avec la première station de base (1) et la pluralité de dispositifs esclaves (101, 102, 103, 104), le débit de données indiquant une quantité de données transmises vers et reçues depuis la station de base (1) et une quantité de données transmises vers et reçues depuis la pluralité de dispositifs esclaves (101, 102, 103, 104) connectés via la communication D2D,
déterminer, sur la base du débit de données surveillé, si un dispositif maître supplémentaire est nécessaire, et
déterminer, sur la base d'un résultat de la détermination, un deuxième dispositif maître (104), parmi la pluralité de dispositifs esclaves (101, 102, 103, 104), qui doit effectuer la communication de données avec la première station de base (1) ou une deuxième station de base (2),
dans lequel le deuxième dispositif maître (104) est déterminé sur la base d'informations sur des distances de chacun de la pluralité de véhicules (10, 11, 12, 13, 14) par rapport aux autres véhicules circulant en peloton, et
dans lequel des dispositifs esclaves (101, 102, 103) restants sont connectés soit au premier dispositif maître, soit au deuxième dispositif maître (104), sur la base d'une distance entre chacun des dispositifs esclaves (101, 102, 103) restants et le premier dispositif maître et d'une distance entre chacun des dispositifs esclaves (101, 102, 103) restants et le deuxième dispositif maître (104).

9. Dispositif électronique (100) selon la revendication 8, dans lequel
l'interface de communication (110) comprend un module de communication mobile (111) configuré pour effectuer une communication de données avec la première station de base (1) et un module de communication D2D (112) configuré pour effectuer une communication de données avec la pluralité de dispositifs esclaves (101, 102, 103, 104) en utilisant un procédé de communication D2D, et
au moins l'un processeur (120), individuellement ou collectivement, est en outre configuré pour exécuter l'une ou plusieurs instructions stockées dans la mémoire (130) afin d'amener le dispositif électronique (100) à :
comparer le débit de données avec un seuil prédéfini, et
déterminer, sur la base d'un résultat de la comparaison, si le dispositif maître supplémentaire qui doit effectuer la communication de données avec la première station de base (1) ou la deuxième station de base (2) est nécessaire.

10. Dispositif électronique (100) selon la revendication 8, dans lequel au moins l'un processeur (120) est en outre configuré pour déterminer au moins un deuxième dispositif maître parmi la pluralité de dispositifs esclaves (101, 102, 103, 104).

11. Dispositif électronique (100) selon la revendication 8, dans lequel
au moins l'un processeur (120), individuellement ou collectivement, est en outre configuré pour exécuter l'une ou plusieurs instructions stockées dans la mémoire (130) afin d'amener le dispositif électronique (100) à :
recevoir respectivement, via l'interface de communication (110), depuis la pluralité de dispositifs esclaves (101, 102, 103, 104), des valeurs d'indicateur de performance des signaux liés à la première station de base (1) pour la pluralité de dispositifs esclaves (101, 102, 103, 104), et
déterminer le deuxième dispositif maître parmi la pluralité de dispositifs esclaves (101, 102, 103, 104) sur la base des valeurs d'indicateur de performance respectivement reçues depuis la pluralité de dispositifs esclaves (101, 102, 103, 104).

12. Dispositif électronique (100) selon la revendication 8, dans lequel
au moins l'un processeur (120), individuellement ou collectivement, est en outre configuré pour exécuter l'une ou plusieurs instructions stockées dans la mémoire (130) afin d'amener le dispositif électronique (100) à :
obtenir, via l'interface de communication (110), les informations sur des distances de chacun de la pluralité de véhicules (10, 11, 12, 13, 14) par rapport aux autres véhicules,
calculer une valeur moyenne des distances de chacun de la pluralité de véhicules (10, 11, 12, 13, 14) par rapport aux autres véhicules, et
déterminer un dispositif esclave qui est monté sur un véhicule présentant une valeur moyenne minimale des distances calculées pour chacun de la pluralité de véhicules (10, 11, 12, 13, 14), comme le deuxième dispositif maître.

13. Dispositif électronique (100) selon la revendication 8, dans lequel au moins l'un processeur (120), individuellement ou collectivement, est en outre configuré pour exécuter l'une ou plusieurs instructions stockées dans la mémoire (130) afin d'amener le dispositif électronique (100) à :
commander l'interface de communication (110) à transmettre, vers le deuxième dispositif maître, un signal de détermination de dispositif maître indiquant qu'il a été déterminé comme le deuxième dispositif maître.

14. Dispositif électronique (100) selon la revendication 8, dans lequel au moins l'un processeur (120), individuellement ou collectivement, est en outre configuré pour exécuter l'une ou plusieurs instructions stockées dans la mémoire (130) afin d'amener le dispositif électronique (100) à :
commander l'interface de communication (110) à transmettre, vers le deuxième dispositif maître, au moins une information parmi des informations d'identification de la pluralité d'informations d'adresse de Protocole Internet, IP, de dispositifs esclaves (101, 102, 103, 104) de celui-ci, et des informations de taille des données précédemment reçues parmi des données requises par la pluralité de dispositifs esclaves (101, 102, 103, 104), qui sont nécessaires pour une connexion de communication D2D avec la pluralité de dispositifs esclaves (101, 102, 103, 104).

15. Produit de programme informatique comprenant un support de stockage lisible par ordinateur, dans lequel le support de stockage comprend des instructions qui sont exécutées par un dispositif électronique (100) qui est monté sur un véhicule maître (10) parmi une pluralité de véhicules (10, 11, 12, 13, 14) circulant en peloton, pour effectuer le procédé selon l'une quelconque des revendications 1 à 7.
